(19) **Europäisches Patentamt / European Patent Office / Office européen des brevets**

(11) **EP 4 530 025 A1**

(12) **EUROPEAN PATENT APPLICATION**
published in accordance with Art. 153(4) EPC

(43) Date of publication:
02.04.2025 Bulletin 2025/14

(21) Application number: 22943489.9

(22) Date of filing: 31.10.2022

(51) International Patent Classification (IPC):
*B25J 9/16* (2006.01)

(52) Cooperative Patent Classification (CPC):
B25J 9/16

(86) International application number:
PCT/CN2022/128611

(87) International publication number:
WO 2023/226302 (30.11.2023 Gazette 2023/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 23.05.2022 CN 202210560255

(71) Applicant: Innolcon Medical Technology (Suzhou)
Co., Ltd.
Jiangsu 215000 (CN)

(72) Inventors:
• SUN, Yi
  Suzhou, Jiangsu 215000 (CN)
• ZHONG, Pengfei
  Suzhou, Jiangsu 215000 (CN)
• LUO, Wei
  Suzhou, Jiangsu 215000 (CN)

(74) Representative: Rau, Schneck & Hübner
Patentanwälte Rechtsanwälte PartGmbB
Königstraße 2
90402 Nürnberg (DE)

(54) **MOTION TRAJECTORY PLANNING METHOD AND APPARATUS BASED ON S-CURVE VELOCITY PROFILE**

(57) A method and apparatus for planning a motion trajectory based on an S-curve velocity profile are provided according to embodiments of the application. The method comprising: if a motion path of a robot from a starting point to an end point is a straight line path and an initial velocity of the robot at the starting point is less than a current maximum preset velocity, planning a duration of an acceleration section for a first motion trajectory from the initial velocity to the current maximum preset velocity, so that a maximum planned velocity obtained after the acceleration section ends is less than or equal to the current maximum preset velocity. According to the method, parameters that meet user settings as much as possible and through which trajectory planning can also be completed can be found according to system parameters and user set parameters, thereby avoiding the situation that trajectory planning cannot be completed because there is no solution, and improving the adaptability.

FIG. 2

EP 4 530 025 A1

**Description**

**FIELD OF THE PRESENT DISCLOSURE**

The present application relates to a technical field of robot motion planning, and in particular to a method and apparatus for planning a motion trajectory based on an S-curve velocity profile.

**BACKGROUND OF THE PRESENT DISCLOSURE**

In order to enable the robot to perform a point-to-point linear motion according to preset requirements, it is usually necessary to plan the motion trajectory of the robot from the starting point location to the end point location, and the motion trajectory planning is essentially to plan a duration of each stage with a velocity change during the motion under the constraint of the robot motion conditions. At present, the motion trajectory planning of the robot is based on the S-curve velocity profile under the constraints of an initial motion state, a motion ending state, and a total travel distance of the robot according to the maximum velocity set by a user (hereafter referred to as "user set maximum travel velocity").

Under special circumstances, for example, in which a total travel distance is short and the user set maximum travel velocity is large, when the above-mentioned method is used to plan the motion trajectory of the robot, the planned maximum velocity may not reach the user set maximum travel velocity, and thus the problem of no solution will be caused, so that the planning cannot be completed.

**SUMMARY OF THE PRESENT DISCLOSURE**

The existing motion trajectory planning method may have no solution, and the technical problem will occur that planning cannot be completed. In order to solve this problem, according to embodiments of the present application, there are provided a method and apparatus for planning a motion trajectory based on an S-curve velocity profile, and specifically, the present application discloses the following technical solution.

In a first aspect, an embodiment of the present application provides a method for planning a motion trajectory based on an S-curve velocity profile, the method including:

determining a motion path of a robot from a starting point to an end point;
detecting whether an initial velocity $v_s$ of a robot at the starting point is less than a current maximum preset velocity $V_{sm}$ if the motion path is a straight line path from the starting point to the end point; and
planning a duration of an acceleration section for a first motion trajectory from the initial velocity $v_s$ to the current maximum preset velocity $V_{sm}$, so that a maximum planned velocity obtained after the acceleration section ends is less than or equal to the current maximum preset velocity $V_{sm}$, if the initial velocity $v_s$ is less than the current maximum preset velocity $V_{sm}$.

In conjunction with the first aspect, in one implementation of the first aspect, the planning a duration of an acceleration section includes:

detecting whether an initial acceleration $A_s$ of the robot at the starting point is less than a maximum preset acceleration $A_{sma}$ of the acceleration section;
sequentially planning durations of a uniformly accelerated acceleration section and a uniformly decelerated acceleration section of the acceleration section if the initial acceleration $A_s$ is less than the maximum preset acceleration $A_{sma}$ of the acceleration section;
acquiring a current maximum planned velocity $V_{rs}$ after the uniformly decelerated acceleration section ends; and
planning a duration of a uniform acceleration section of the acceleration section if the current maximum planned velocity $V_{rs}$ is less than or equal to the current maximum preset velocity $V_{sm}$.

In conjunction with the first aspect, in one implementation of the first aspect, the method further includes: replanning the durations of the uniformly accelerated acceleration section and the uniformly decelerated acceleration section if the current maximum planned velocity $V_{rs}$ is greater than the current maximum preset velocity $V_{sm}$.

In conjunction with the first aspect, in one implementation of the first aspect, the method further includes: planning a duration of a deceleration section for the first motion trajectory from the initial velocity $v_s$ to the current maximum preset velocity $V_{sm}$, so that a maximum planned velocity obtained after the deceleration section ends is less than or equal to the current maximum preset velocity $V_{sm}$, if the initial velocity $v_s$ is greater than the current maximum preset velocity $V_{sm}$.

In conjunction with the first aspect, in one implementation of the first aspect, the method further includes:

detecting, after the planning of the first motion trajectory from the initial velocity $v_s$ to the current maximum preset velocity $V_{sm}$ is completed, whether the current maximum preset velocity $V_{sm}$ is less than a final velocity $v_e$ of the robot at the end point; and

planning a duration of an acceleration section for a second motion trajectory from the current maximum preset velocity $V_{sm}$ to the final velocity $v_e$ of the robot at the end point, so that a planned final velocity obtained after the acceleration section ends is equal to the final velocity $v_e$, if the current maximum preset velocity $V_{sm}$ is less than the final velocity $v_e$.

In conjunction with the first aspect, in one implementation of the first aspect, the method further includes: planning a duration of a deceleration section for the second motion trajectory from the current maximum preset velocity $V_{sm}$ to the final velocity $v_e$ of the robot at the end point, so that a planned final velocity obtained after the deceleration section ends is equal to the final velocity $v_e$, if the current maximum preset velocity $V_{sm}$ is greater than the final velocity $v_e$.

In conjunction with the first aspect, in one implementation of the first aspect, the planning a duration of a deceleration section further includes:

sequentially planning durations of a uniformly accelerated deceleration section and a uniformly decelerated deceleration section of the deceleration section;

acquiring a current planned final velocity $V_{re}$ after the uniformly decelerated deceleration section ends; and

planning a duration of a uniform deceleration section of the deceleration section if the current planned final velocity $V_{re}$ is greater than or equal to the final velocity $v_e$.

In conjunction with the first aspect, in one implementation of the first aspect, the method further includes: replanning the durations of the uniformly accelerated deceleration section and the uniformly decelerated deceleration section if the current planned final velocity $V_{re}$ is less than the final velocity $v_e$.

In conjunction with the first aspect, in one implementation of the first aspect, the method further includes: planning a duration of a uniform velocity section of the motion trajectory, the uniform velocity section being a part of the motion trajectory except the first motion trajectory and the second motion trajectory, if a sum of a first total travel distance $S_1$ from the initial velocity $v_s$ to the current maximum preset velocity $V_{sm}$ and a second total travel distance $S_2$ from the current maximum preset velocity $V_{sm}$ to the final velocity $v_e$ is less than a straight line total distance P from the starting point to the end point.

In conjunction with the first aspect, in one implementation of the first aspect, the planning a duration of a uniform velocity section of the motion trajectory further includes:

determining a uniform velocity section distance from the sum of the first total travel distance $S_1$ and the second total travel distance $S_2$, and the straight line total distance P; and

determining the duration of the uniform velocity section based on the maximum planned velocity and the uniform velocity section distance.

In conjunction with the first aspect, in one implementation of the first aspect, the method further includes: replanning a duration of the first motion trajectory and a duration of the second motion trajectory of the motion trajectory if the sum of the first total travel distance $S_1$ from the initial velocity $v_s$ to the current maximum preset velocity $V_{sm}$ and the second total travel distance $S_2$ from the current maximum preset velocity $V_{sm}$ to the final velocity $v_e$ is greater than the straight line total distance P from the starting point to the end point.

In conjunction with the first aspect, in one implementation of the first aspect, the method further includes:

determining a planned total duration from the duration of the first motion trajectory, the duration of the second motion trajectory, and the duration of the uniform velocity section of the motion trajectory; and

ending planning if the planned total duration is equal to a user preset time.

In conjunction with the first aspect, in one implementation of the first aspect, the current maximum preset velocity $V_{sm}$ is a velocity value which is a smaller velocity value between a system maximum velocity of the robot and a user set maximum travel velocity.

In a second aspect, an embodiment of the present application provides a method for planning a motion trajectory based on an S-curve velocity profile, the method including:

determining a motion path of a robot from a starting point to an end point;

if the motion path is not a straight line path from the starting point to the end point and there is any target point which is a point outside a straight line between the starting point and the end point, determining coordinates of a first intermediate point and a second intermediate point which are sequentially passed by based on a starting point location coordinate, a target point location coordinate, an end point location coordinate and a preset turning radius;

detecting whether an initial velocity $v_s$ of a robot at the starting point is less than a current maximum preset velocity $V_{sm}$; and

planning a duration of an acceleration section of the motion trajectory for a straight line path from the starting point to the first intermediate point, so that a maximum planned velocity obtained after the acceleration section ends is less than or equal to the current maximum preset velocity $V_{sm}$, if the initial velocity $v_s$ is less than the current maximum preset velocity $V_{sm}$.

In conjunction with the second aspect, in one implementation of the second aspect, the method further includes: planning a duration of a deceleration section of the motion trajectory for the straight line path from the starting point to the first intermediate point, so that a maximum planned velocity obtained after the deceleration section ends is less than or equal to the current maximum preset velocity $V_{sm}$, if the initial velocity $v_s$ is greater than the current maximum preset velocity $V_{sm}$.

In conjunction with the second aspect, in one implementation of the second aspect, the method further includes: after the planning the trajectory of the straight line path from the starting point to the first intermediate point is completed, planning a duration of a uniform velocity section of the motion trajectory for an arc path formed by the first intermediate point and the second intermediate point, the velocity of the uniform velocity section being a maximum planned velocity obtained after the planning the trajectory of the straight line path from the starting point to the first intermediate point ends, and a radius of the arc path being the preset turning radius.

In conjunction with the second aspect, in one implementation of the second aspect, the method further includes:

after the planning the trajectory of the arc path formed by the first intermediate point and the second intermediate point is completed, detecting whether the current maximum preset velocity $V_{sm}$ is greater than a final velocity $v_e$ of the robot at the end point; and

planning a duration of a deceleration section of the motion trajectory for the straight line path from the second intermediate point to the end point, so that a planned final velocity obtained after the deceleration section ends is equal to the final velocity $v_e$ of the robot at the end point, if the current maximum preset velocity $V_{sm}$ is greater than the final velocity $v_e$.

In conjunction with the second aspect, in one implementation of the second aspect, the method further includes: planning a duration of an acceleration section of the motion trajectory for the straight line path from the second intermediate point to the end point, so that a planned final velocity obtained after the acceleration section ends is equal to the final velocity $v_e$ of the robot at the end point, if the current maximum preset velocity $V_{sm}$ is less than the final velocity $v_e$.

In conjunction with the second aspect, in one implementation of the second aspect, before the determining coordinates of a first intermediate point and a second intermediate point which are sequentially passed by based on a starting point location coordinate, a target point location coordinate, an end point location coordinate and a preset turning radius, the method further includes:

detecting whether the target point is a waypoint of the robot.

In a third aspect, an embodiment of the present application provides an apparatus for planning a motion trajectory based on an S-curve velocity profile, the apparatus including:

a motion path detection module configured to determine a motion path of the robot from a starting point to an end point;

an initial velocity detection module configured to, if the motion path is a straight line path from the starting point to the end point, detect whether an initial velocity $v_s$ of a robot at the starting point is less than a current maximum preset velocity $V_{sm}$; and

a motion trajectory planning module configured to, if the initial velocity $v_s$ is less than the current maximum preset velocity $V_{sm}$, plan a duration of an acceleration section for a first motion trajectory from the initial velocity $v_s$ to the current maximum preset velocity $V_{sm}$, so that a maximum planned velocity obtained after the acceleration section ends is less than or equal to the current maximum preset velocity $V_{sm}$.

In conjunction with the third aspect, in one implementation of the third aspect, the apparatus further includes:

a final velocity detection module configured to, after planning of the first motion trajectory from the initial velocity $v_s$ to the current maximum preset velocity $V_{sm}$ is completed, detect whether the current maximum preset velocity $V_{sm}$ is less than a final velocity $v_e$ of the robot at the end point, and

wherein the motion trajectory planning module is further configured to, if the current maximum preset velocity $V_{sm}$ is less than the final velocity $v_e$, plan a duration of an acceleration section for a second motion trajectory from the current maximum preset velocity $V_{sm}$ to the final velocity $v_e$, so that a planned final velocity obtained after the acceleration section ends is equal to the final velocity $v_e$ of the robot at the end point.

In a fourth aspect, an embodiment of the present application provides an apparatus for planning a motion trajectory based on an S-curve velocity profile, the apparatus includes:

a motion path detection module configured to determine a motion path of the robot from a starting point to an end point;
an intermediate point coordinate determination module configured to, if the motion path is not a straight line path from the starting point to the end point and there is any target point which is a point outside a straight line between the starting point and the end point, determine coordinates of a first intermediate point and a second intermediate point which are sequentially passed by based on a starting point location coordinate, a target point location coordinate, an end point location coordinate and a preset turning radius;
an initial velocity detection module configured to detect whether an initial velocity $v_s$ of a robot at the starting point is less than a current maximum preset velocity $V_{sm}$; and
a first straight line path planning module configured to, if the initial velocity $v_s$ is less than the current maximum preset velocity $V_{sm}$, plan a duration of an acceleration section of the motion trajectory for a straight line path from the starting point to the first intermediate point, so that a maximum planned velocity obtained after the acceleration section ends is less than or equal to the current maximum preset velocity $V_{sm}$.

In conjunction with the fourth aspect, in one implementation of the fourth aspect, the apparatus further includes: an arc path planning module configured to, after planning the trajectory of the straight line path from the starting point to the first intermediate point is completed, plan a duration of a uniform velocity section of the motion trajectory for an arc path formed by the first intermediate point and the second intermediate point, the velocity of the uniform velocity section being a maximum planned velocity obtained after planning the trajectory of the straight line path from the starting point to the first intermediate point ends, and a radius of the arc path being the preset turning radius.

In conjunction with the fourth aspect, in one implementation of the fourth aspect, the apparatus further includes:

a final velocity detection module configured to, after planning the trajectory of the arc path formed by the first intermediate point and the second intermediate point is completed, detect whether the current maximum preset velocity $V_{sm}$ is greater than a final velocity $v_e$ of the robot at the end point; and
a second straight line path planning module configured to, if the current maximum preset velocity $V_{sm}$ is greater than the final velocity $v_e$, plan a duration of a deceleration section of the motion trajectory for the straight line path from the second intermediate point to the end point, so that a planned final velocity obtained after the deceleration section ends is equal to the final velocity $v_e$ of the robot at the end point.

Embodiments of the present application provide a method and apparatus for planning a motion trajectory based on an S-curve velocity profile. In this method: under the condition that a motion path of a robot from a starting point to an end point is a straight line path and an initial velocity of a robot at the starting point is less than a current maximum preset velocity, planning a duration of an acceleration section for a first motion trajectory from the initial velocity to the current maximum preset velocity, so that the maximum planned velocity obtained after the acceleration section ends is less than or equal to the current maximum preset velocity. In the method, parameters that meet user settings as much as possible and by which the trajectory planning can be completed can be found according to system parameters and user set parameters, thereby avoiding the situation that trajectory planning cannot be completed because there is no solution, and improving adaptability of the method.

**BRIEF DESCRIPTION OF THE DRAWINGS**

FIG. 1 is a schematic structural diagram showing an S-curve velocity profile;
FIG. 2 is a schematic workflow diagram showing a method for planning a motion trajectory based on an S-curve velocity profile according to an embodiment of the present application;
FIG. 3 is a schematic diagram showing a motion trajectory planning according to an embodiment of the present application;
FIG. 4 is a schematic workflow diagram showing another method for planning a motion trajectory based on an S-curve velocity profile according to an embodiment of the present application;
FIG. 5 is a diagram showing effect of motion trajectory planning using another method for planning a motion trajectory based on an S-curve velocity profile according to an embodiment of the present application;
FIG. 6 is a schematic workflow diagram showing a method for planning a motion trajectory based on an S-curve velocity profile according to another embodiment of the present application;

FIG. 7(a) is a schematic diagram showing a motion path when a target point is a waypoint of the robot;

FIG. 7(b) is a schematic diagram showing a motion path when a target point is not a waypoint of the robot; and

FIG. 8 is a schematic structural diagram showing an apparatus for planning a motion trajectory based on an S-curve velocity profile according to an embodiment of the present application.

## DESCRIPTION OF THE EMBODIMENTS

To make the objectives, technical solutions, and advantages of the present application clearer, the following further describes implementations of the present application in detail with reference to the accompanying drawings.

The S-curve velocity profile provided by an embodiment of the present application is first described with reference to the accompanying drawings.

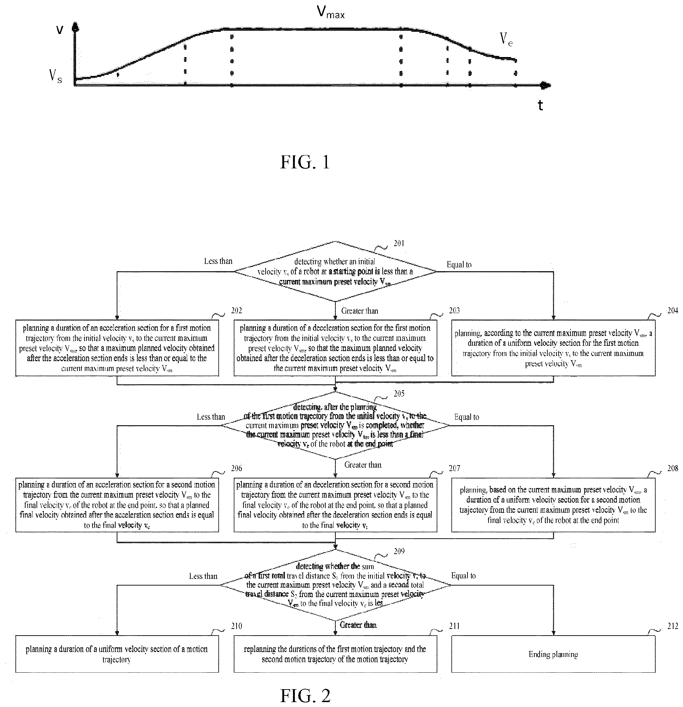

With the increasing degree of automation, robots are widely used in a variety of fields, such as medical field, in which robots can replace human arms to achieve point-to-point linear motion. In the whole motion process of the robot, a motion process of acceleration, uniform velocity and deceleration is generally experienced. And a velocity change curve with time is called a velocity curve. A common velocity curve has a trapezoidal velocity curve and an S-curve velocity profile. With reference to the schematic structural diagram showing the S-curve velocity profile shown in FIG. 1, the S-curve velocity profile mainly includes the following seven stages: a uniformly accelerated acceleration section (during which an accelerated acceleration remains constant and is a positive value, and the velocity slowly increases), a uniform acceleration section (during which the accelerated acceleration is zero, the acceleration remains constant and is a positive value, and the velocity rapidly increases), a uniformly decelerated acceleration section n (during which the accelerated acceleration remains constant and is mutually an opposite number with the uniformly accelerated acceleration section, and the velocity slowly increases), a uniform velocity section (during which the velocity remains constant), a uniformly accelerated deceleration section (during which the accelerated acceleration is the same as the accelerated acceleration of the uniformly decelerated acceleration section, and the velocity slowly decreases), a uniform deceleration section (during which the accelerated acceleration is zero, the acceleration remains constant and is a negative value, and the velocity rapidly decreases) and a uniformly decelerated deceleration section (during which the accelerated acceleration is the same as the accelerated acceleration of the uniformly accelerated acceleration section, and the velocity slowly decreases); $v_s$ is an initial velocity at the starting point, $v_e$ is a final velocity at the end point, and $V_{max}$ is the maximum operating velocity. Compared with a trapezoidal velocity curve, the S-curve velocity profile has less impact on the motor and mechanical structure of the robot with a more smooth run.

In order to solve the problem that the planning may fail to be completed using the existing motion trajectory planning method, according to the method provided by the embodiments of the present application, the motion trajectory is mainly divided into three sections, i.e., a first motion trajectory from the initial velocity $v_s$ to the current maximum preset velocity $V_{sm}$, a second motion trajectory from the current maximum preset velocity $V_{sm}$ to the final velocity $v_e$, and a uniform velocity section except for the first motion trajectory and the second motion trajectory. It can be seen therefrom that according to the method provided by the embodiments of the present application, selective planning is mainly performed on various stages in an S-curve velocity profile in a relevant manner, so that the situation that trajectory planning cannot be completed because there is no solution is avoided, and the method of the present disclosure can also adapt to different requirements in practice to a greater extent.

The method for planning motion trajectory based on an S-curve velocity profile according to an embodiment of the present application is described below with reference to the accompanying drawings. The method for planning motion trajectory based on an S-curve velocity profile provided by an embodiment of the present application, after determining a motion path of a robot from a starting point to an end point, is for a case where the motion path is a straight line path from the starting point to the end point.

Embodiment 1:

The embodiment of the present application provides a method for planning motion trajectory based on an S-curve velocity profile, under the condition that the motion path is a straight line path from a starting point to an end point, the motion trajectory of the robot planned by the embodiment of the present application may include an acceleration section, a deceleration section and a uniform velocity section, with reference to the workflow schematic diagram shown in FIG. 2, the method specifically includes the following steps:

step 201: detecting whether an initial velocity $v_s$ of a robot at the starting point is less than a current maximum preset velocity $V_{sm}$. Perform Step 202 if the initial velocity $v_s$ is less than the current maximum preset velocity $V_{sm}$; perform step 203 if the initial velocity $v_s$ is greater than the current maximum preset velocity $V_{sm}$; and perform step 204 if the initial velocity $v_s$ is equal to the current maximum preset velocity $V_{sm}$.

In one implementation, the current maximum preset velocity $V_{sm}$ is a velocity value which is a smaller velocity value between a system maximum velocity of the robot and a user set maximum travel velocity.

In the above-mentioned manner, when a system parameter conflicts with a user set parameter, the system parameter can be preferentially satisfied, and then the user set parameter can be satisfied, so that the system can be better protected.

Alternatively, the user set parameter may be preferred in other feasible implementations, which is not limited by the embodiments of the present application.

As such, a flexible choice of motion parameter extremum between the system parameter and the user set parameter can be more widely adapted to the requirements in practice.

Step 202: planning a duration of an acceleration section for a first motion trajectory from the initial velocity $v_s$ to the current maximum preset velocity $V_{sm}$, so that a maximum planned velocity obtained after the acceleration section ends is less than or equal to the current maximum preset velocity $V_{sm}$.

Step 203: planning a duration of a deceleration section for the first motion trajectory from the initial velocity $v_s$ to the current maximum preset velocity $V_{sm}$, so that the maximum planned velocity obtained after the deceleration section ends is less than or equal to the current maximum preset velocity $V_{sm}$.

Step 204: planning, according to the current maximum preset velocity $V_{sm}$, a duration of a uniform velocity section for the first motion trajectory from the initial velocity $v_s$ to the current maximum preset velocity $V_{sm}$, .

After implementing the steps 202, 203 and 204, the method for planning motion trajectory based on an S-curve velocity profile provided by an embodiment of the present application further includes:

step 205: detecting, after the planning of the first motion trajectory from the initial velocity $v_s$ to the current maximum preset velocity $V_{sm}$ is completed, whether the current maximum preset velocity $V_{sm}$ is less than a final velocity $v_e$ of the robot at the end point. If it is less than, perform step 206,; if it is greater than, perform step 207; and if it is equal, perform step 208.

Step 206: planning a duration of an acceleration section for a second motion trajectory from the current maximum preset velocity $V_{sm}$ to the final velocity $v_e$ of the robot at the end point, so that a planned final velocity obtained after the acceleration section ends is equal to the final velocity $v_e$.

Step 207: planning a duration of an deceleration section for a second motion trajectory from the current maximum preset velocity $V_{sm}$ to the final velocity $v_e$ of the robot at the end point, so that a planned final velocity obtained after the deceleration section ends is equal to the final velocity $v_e$.

Step 208: planning, based on the current maximum preset velocity $V_{sm}$, a duration of a uniform velocity section for a second motion trajectory from the current maximum preset velocity $V_{sm}$ to the final velocity $v_e$ of the robot at the end point.

In addition, after planning of the first motion trajectory and the second motion trajectory of the robot motion trajectory is completed, if the sum of a first total travel distance $S_1$ from the initial velocity $v_s$ to the current maximum preset velocity $V_{sm}$ and a second total travel distance $S_2$ from the current maximum preset velocity $V_{sm}$ to the final velocity $v_e$ is less than the straight line total distance P from the starting point to the end point, a method for planning motion trajectory based on an S-curve velocity profile provided by an embodiment of the present application may further include planning of a uniform velocity section, wherein the uniform velocity section is a part of the motion trajectory except the first motion trajectory and the second motion trajectory. That is to say, after implementing steps 206, 207 or 208, the following steps may be specifically included:

step 209: detecting whether the sum of a first total travel distance $S_1$ from the initial velocity $v_s$ to the current maximum preset velocity $V_{sm}$ and a second total travel distance $S_2$ from the current maximum preset velocity $V_{sm}$ to the final velocity $v_e$ is less than or equal to the straight line total distance P from the starting point to the end point. If it is less than, perform step 210; if it is greater than, perform step 211; and if it is equal, perform step 212.

Step 210: planning a duration of a uniform velocity section of a motion trajectory.

Step 211: replanning the durations of the first motion trajectory and the second motion trajectory of the motion trajectory.

Step 212: the planning ends.

Specifically, in step 211, an adaptive algorithm may be employed to replan the duration of the first motion trajectory and the duration of the second motion trajectory of the motion trajectory.

The adaptive algorithms include, but are not limited to: a bisection iteration method, a newton iteration method, a recursive iteration method, a jacobian iteration method, a gaussian iteration method, a secant iteration method, a conjugate gradient generation method and a steepest descent method, etc., which are not specifically limited.

Illustratively, taking the bisection iteration method as an example, an upper limit of the iteration velocity is set as V1 and a lower limit as V2, initially V1 = the calculated current maximum planned velocity $V_{rs}$, and V2 = 0; the velocity of iteration is set to V2 = (1/2) × (V1 + V2), i.e., V2 is equal to (1/2) $V_{rs}$, whether the final result meets the limiting condition is calculated, and if the calculated total travel distance is greater than the specified distance, the velocity needs to be still reduced. V1 = V2 is set, i.e., V1 is equal to (1/2) $V_{rs}$, V2 = 0, if the calculated total travel distance is less than the specified distance, the velocity is increased, the iteration velocity is set as V2 = (1/2) × (V1 + V2), the iteration calculation is continued until the calculated total travel distance is equal to the specified distance or the difference is less than the user tolerable error. It should be noted that the adaptive algorithm mentioned in various embodiments of the present application is a similar process, which will not be described in detail hereinafter.

With the method for planning motion trajectory provided in the embodiment of the present application, parameters that meet user settings as much as possible and through which the trajectory planning can also be completed can be found according to system parameters and user set parameters, thereby avoiding the situation that trajectory planning cannot be completed because there is no solution, and impriving the adaptability.

Specifically, the following first describes the planning of an acceleration section of a motion trajectory provided by an embodiment of the present application.

The acceleration section planned by the embodiments of the present application may include a uniformly accelerated acceleration section, a uniform acceleration section, and a uniformly decelerated acceleration section, that is to say, the planned acceleration section has a duration that is the sum of the duration of the uniformly accelerated acceleration section, the duration of the uniform acceleration section, and the duration of the uniformly decelerated acceleration section. There are several planning methods for the duration of the acceleration section of the motion trajectory, which are specifically as follows:

planning method 1:

step 1: under the condition that the initial velocity $v_s$ of a robot at the starting point is less than the current maximum preset velocity $V_{sm}$, and the initial acceleration $A_s$ of the robot at the starting point is less than the maximum preset acceleration $A_{sma}$ of the acceleration section, the duration of the uniformly accelerated acceleration section and the duration of the uniformly decelerated acceleration section of the acceleration section are sequentially planned for the first motion trajectory.

Specifically, in step 1, the value of the maximum preset acceleration $A_{sma}$ of the acceleration section is a positive value, and is a smaller velocity value of the maximum acceleration of the system acceleration section of the robot and the user set maximum acceleration of the acceleration section.

Alternatively, in other feasible implementations, the maximum preset acceleration $A_{sma}$ of the acceleration section may also be prioritized by a user set parameter, which is not limited by the embodiments of the present application.

The duration of the uniformly accelerated acceleration section in step 1 can be specifically determined by the following formula:

$$T_1 = (A_{sma} - A_s)/J_1$$

wherein $T_1$ is the duration of the uniformly accelerated acceleration section, $J_1$ is a preset accelerated acceleration of the uniformly accelerated acceleration section, and the value of $J_1$ is a positive value.

The duration of the uniformly decelerated acceleration section in step 1 can be specifically determined by the following formula:

$$T_3 = |A_{sma}/J_3|$$

wherein $T_3$ is the duration of the uniformly decelerated acceleration section, $J_3$ is a preset accelerated acceleration of the uniformly decelerated acceleration section, the value of $J_3$ is a negative value, and $\|$ is an absolute value symbol.

It should be noted that the absolute values of a preset accelerated acceleration $J_1$ in the uniformly accelerated acceleration section and the preset accelerated acceleration $J_3$ in the uniformly decelerated acceleration section may be the same or different, which is not limited by the embodiments of the present application.

By using the above-mentioned method to sequentially plan the duration of the uniformly accelerated acceleration section and the duration of the uniformly decelerated acceleration section of the acceleration section, so that the robot can accelerate to the maximum acceleration as soon as possible and start uniform motion as gently as possible, so that the acceleration and deceleration performance of the system can be maximized and the impact force can be minimized, and thus a non-mirrored S-shaped trajectory planning may more flexibly cope with more applications.

Step 2: acquiring a current maximum planned velocity $V_{rs}$ after the uniformly decelerated acceleration section ends .

Specifically, in step 2, the current maximum planned velocity $V_{rs}$ after the uniformly decelerated acceleration section ends can be determined specifically by the following formula:

$$V_{rs} = v_s + \frac{1}{2} \times J_1 \times T_1^2 + \frac{1}{2} \times |J_3| \times T_3^2$$

wherein $T_1$ is the duration of the uniformly accelerated acceleration section, $T_3$ is the duration of a uniformly decelerated acceleration section, $J_1$ is the preset accelerated acceleration of the uniformly accelerated acceleration section, $J_3$ is a preset accelerated acceleration of a uniformly decelerated acceleration section, and $\|$ is an absolute value symbol.

Step 3: planning a duration of a uniform acceleration section of the acceleration section under the condition that the current maximum planned velocity $V_{rs}$ is less than or equal to the current maximum preset velocity $V_{sm}$.

Alternatively, step 4, replanning the durations of the uniformly accelerated acceleration section and the uniformly decelerated acceleration section under the condition that the current maximum planned velocity $V_{rs}$ is greater than the current maximum preset velocity $V_{sm}$.

Specifically, in step 3, the duration of the uniform acceleration section of the acceleration section can be determined specifically by the following formula:

$$T_2 = (V_{sm} - V_{rs})/A_{sma}$$

wherein $T_2$ is the duration of the uniform acceleration section.

Specifically, in step 4, there is no uniform acceleration section after replanning. By replanning the duration of the uniformly accelerated acceleration section and the duration of the uniformly decelerated acceleration section, an adaptive algorithm can be used to reduce the current maximum planned velocity $V_{rs}$ until the maximum planned velocity $V_{rs}$ obtained after the acceleration section ends is less than or equal to the current maximum preset velocity $V_{sm}$.

As such, planning the acceleration section using the above-mentioned planning method can make the robot meet the current maximum preset velocity $V_{sm}$ as far as possible, and can also further meet the maximum preset acceleration $A_{sma}$ of the acceleration section, so that the system acceleration performance can be maximized, and the impact force can be mitigated as far as possible, and thus the robot can more flexibly cope with a variety of applications.

Planning method 2:
under the condition that the initial velocity $v_s$ of a robot at the starting point is less than the current maximum preset velocity $V_{sm}$ and the initial acceleration $A_s$ of the robot at the starting point is greater than or equal to the maximum preset acceleration $A_{sma}$ of the acceleration section, the duration of the uniformly decelerated acceleration section of the acceleration section is directly planned for the first motion trajectory.

Specifically, the duration of the uniformly decelerated acceleration section can be determined specifically by the following formula:

$$T_3 = |(A_s - A_{sma})/J_3|$$

wherein $T_3$ is the duration of the uniformly decelerated acceleration section, $J_3$ is a preset accelerated acceleration of the uniformly decelerated acceleration section, the value is a negative value, and $\|$ is an absolute value symbol.

In the above planning method 2, if the maximum planned velocity obtained after the planning is greater than the current maximum preset velocity $V_{sm}$, an adaptive algorithm is used for replanning, which will not be described in detail herein.

Planning method 3:
after the planning of the first motion trajectory from the initial velocity $v_s$ to the current maximum preset velocity $V_{sm}$ has been completed, under the condition that the current maximum preset velocity $V_{sm}$ is less than the final velocity $v_e$ of the robot at the end point, acceleration section planning is performed for the second motion trajectory; specifically, according to a magnitude relationship between the final deceleration $A_e$ of the robot at the end point and the maximum preset acceleration $A_{sma}$ of the acceleration section, referring to the above-mentioned planning method 1 and planning method 2, the duration of the uniformly accelerated acceleration section and the duration of the uniformly decelerated acceleration section of the acceleration section are sequentially planned, or the duration of the uniformly decelerated acceleration section of the acceleration section is directly planned.

In the above-mentioned planning method 3, if the final planning velocity obtained after reaching the end point is not equal to the final velocity $v_e$ of the robot at the end point, an adaptive algorithm needs to be used for replanning, which will not be described in detail herein.

In addition, other planning methods can also be used to plan the duration of the acceleration section, such as preferentially satisfying the maximum preset acceleration $A_{sma}$ of the acceleration section rather than preferentially satisfying the current maximum preset velocity $V_{sm}$, which is not limited by the embodiments of the present application.

It should be noted that the uniformly accelerated acceleration section, the uniform acceleration section and the uniformly decelerated acceleration section can be planned or combined in different ways according to different application scenarios or user requirements, for example, the embodiment of the present application shows the uniformly accelerated acceleration section first, then the uniform acceleration section, and finally the uniformly decelerated acceleration section; or some sections may be absent, such as only a uniformly accelerated acceleration section or a uniformly decelerated acceleration section, etc.; or the sequence can also be adjusted according to different requirements, such as firstly a uniformly decelerated acceleration section, then a uniform acceleration section, and finally a uniformly accelerated acceleration section, which is not limited by the embodiments of the present application.

The following describes the planning of deceleration section of the motion trajectory provided by the embodiments of the present application.

The deceleration section planned by the embodiments of the present application may include a uniformly accelerated deceleration section, a uniformly deceleration section, and a uniformly decelerated deceleration section, that is to say, the planned deceleration section has the duration that is the sum of the duration of the uniformly accelerated deceleration section, the duration of the uniform deceleration section, and the duration of the uniform decelerated deceleration section. There are several planning methods for the duration of deceleration section of motion trajectory, which are specifically as follows:

planning method 1:

step 1: after planning of the first motion trajectory from the initial velocity $v_s$ to the current maximum preset velocity $V_{sm}$ has been completed, under the condition that the current maximum preset velocity $V_{sm}$ is greater than the final velocity $v_e$, and the final deceleration $A_e$ of the robot at the end point is greater than the maximum preset acceleration $A_{smd}$ of the deceleration section, deceleration section planning is performed for the second motion trajectory, and specifically, the duration of the uniformly accelerated deceleration section and the duration of the uniformly decelerated deceleration section of the deceleration section are sequentially planned.

Specifically, in step 1, the value of the maximum preset acceleration $A_{smd}$ of the deceleration section is a negative value, and is a velocity value having a smaller absolute value between the maximum acceleration of the system deceleration section of the robot and the maximum acceleration of the user set deceleration section.

Alternatively, in other feasible implementations, the maximum preset acceleration $A_{smd}$ of the deceleration section may also be prioritized by a user set parameter, which is not limited by the embodiments of the present application.

The duration of the uniformly accelerated deceleration section in step 1 can be specifically determined by the following formula:

$$T_5 = A_{smd}/J_5$$

wherein $T_5$ is a duration of a uniformly accelerated deceleration section, $J_5$ is a preset accelerated acceleration of the uniformly accelerated deceleration section, and the value of $J_5$ is a negative value.

The duration of the uniformly decelerated deceleration section in step 1 can be specifically determined by the following formula:

$$T_7 = |(A_{smd} - A_e)/J_7|$$

wherein $T_7$ is the duration of a uniformly decelerated deceleration section, $J_7$ is a preset accelerated acceleration of the uniformly decelerated deceleration section, the value of $J_7$ is a positive value, and $\|$ is an absolute value symbol.

It should be noted that the absolute values of a preset accelerated acceleration $J_5$ of the uniformly accelerated deceleration section, and a preset accelerated acceleration $J_7$ of the uniformly decelerated deceleration section may be the same or different, which is not limited by the embodiments of the present application.

The above-mentioned method is used to sequentially plan the duration of the uniformly accelerated deceleration section and the duration of the uniformly decelerated deceleration section of the deceleration section, so that the robot can reach the maximum deceleration as soon as possible, and slow down to the final velocity as gently as possible, so that the acceleration and deceleration performance of the system can be maximized and the impact force can be minimized, and thus a non-mirrored S-shaped trajectory planning can more flexibly cope with more applications.

Step 2: acquiring a current planned final velocity $V_{re}$ after the uniformly decelerated deceleration section ends.

Specifically, in step 2, the current planned final velocity $V_{re}$ after the uniformly decelerated deceleration section ends can be determined specifically by the following formula:

$$V_{re} = V_{sm} - \frac{1}{2} \times |J_5| \times T_5^2 - \frac{1}{2} \times J_7 \times T_7^2$$

wherein $T_5$ is a duration of a uniformly accelerated deceleration section, $T_7$ is a duration of a uniformly decelerated deceleration section, $J_5$ is the preset accelerated acceleration of the uniformly accelerated deceleration section, $J_7$ is a preset accelerated acceleration of the uniformly decelerated deceleration section, and $\|$ is an absolute value symbol.

Step 3: under the condition that the current planned final velocity $V_{re}$ is greater than or equal to the final velocity $v_e$, planning the duration of a uniform deceleration section of the deceleration section.

Alternatively, step 4, under the condition that the currently planned final velocity $V_{re}$ is less than the final velocity $v_e$, replanniing the duration of the uniformly accelerated deceleration section and the duration of the uniformly decelerated deceleration section.

Specifically, in step 3, the duration of the uniform deceleration section of the deceleration section can be determined specifically by the following formula:

$$T_6 = |(V_{re} - v_e)/A_{smd}|$$

wherein $T_6$ is the duration of the uniform deceleration section.

Specifically, in step 4, there is no uniform deceleration section after replanning. The duration of the uniformly accelerated deceleration section and the duration of the uniformly decelerated deceleration section are replanned, and an adaptive algorithm can be used to increase the current planned final velocity $V_{re}$ until the current planned final velocity $V_{re}$ obtained after the deceleration section ends is equal to the current maximum preset velocity $V_{sm}$, which will not be described in detail herein.

As such, planning the deceleration section using the above-mentioned planning method can make the robot meet the current maximum preset velocity $V_{sm}$ as far as possible, and can also further meet the maximum preset acceleration $A_{smd}$ of the deceleration section, so that the system deceleration performance can be maximized, and the impact force can be mitigated as far as possible, and thus the robot can more flexibly cope with a variety of applications.

Planning method 2:

under the condition that the initial velocity $v_s$ is greater than the current maximum preset velocity $V_{sm}$, a deceleration section planning is performed for the first motion trajectory, specifically:

step 1: sequentially planning an initial duration of a uniformly accelerated deceleration section and an initial duration of a uniformly decelerated deceleration section of the deceleration section.

Step 2: acquiring a corresponding current maximum velocity reduction amplitude V after the uniformly accelerated deceleration section and the uniformly decelerated deceleration section end.

Step 3: planning a duration of a uniform deceleration section of the deceleration section, if the difference between the initial velocity $v_s$ and the current maximum preset velocity $V_{sm}$ is greater than or equal to the current maximum velocity reduction amplitude V. In addition, the initial duration of the uniformly accelerated deceleration section and the initial duration of the uniformly decelerated deceleration section are respectively determined as the duration of the uniformly accelerated deceleration section and the duration of the uniformly decelerated acceleration section.

For steps 1, 2, and 3, illustratively, assuming that the initial acceleration $A_s$ and the acceleration when reaching the current maximum preset velocity $V_{sm}$ of the robot are both zero, the preset accelerated acceleration $J_5$ of the uniformly accelerated deceleration section and the preset accelerated acceleration $J_7$ of the uniformly decelerated deceleration section are mutually opposite numbers, and the absolute values are all $J_{max}$, then the initial duration T's of the uniformly accelerated deceleration section and the initial duration $T'_7$ of the uniformly decelerated deceleration section of the deceleration section are all = |the maximum preset acceleration of the deceleration section $A_{smd}/J_{max}|$. The current

maximum velocity reduction amplitude $V = J_{max} \times (T'_5)^2$. The duration $T_6$ of the uniform deceleration section of the deceleration section = $|(v_s - V_{sm} - V)/A_{smd}|$.

Alternatively, step 4, if the difference between the initial velocity $v_s$ and the current maximum preset velocity $V_{sm}$ is less than the current maximum velocity reduction amplitude V, an adaptive convergence algorithm is used to determine the velocity reduction amplitude and the duration of the uniformly accelerated deceleration section, and the velocity reduction amplitude and the duration of the uniformly decelerated deceleration section.

Planning method 3:

under the condition that the initial velocity $v_s$ is greater than the current maximum preset velocity $V_{sm}$, and the current maximum preset velocity $V_{sm}$ is greater than the final velocity $v_e$, the velocity is directly decreased from $v_s$ to $v_e$ at the maximum decelerated deceleration $J_{max}$.

It should be noted that the planning method 3 is equivalent to performing deceleration section planning in both the first half section and the second half section, and is a relatively special planning method, i.e., each deceleration section is not planned in a three-section manner, but directly decelerates at the maximum decelerated deceleration velocity $J_{max}$.

As such, the robot can be quickly reduced from the initial velocity to the final velocity by using the above-mentioned planning method 3 for deceleration section planning, and if the final velocity is zero, the robot can be quickly stopped, so as to meet the requirements of the shortest stopping time; therefore, during the operation of the system, the S-shaped trajectory of the stopping function can be planned at any time, thereby reducing the impact on the motor, system and so on.

Planning method 4:

under the condition that the initial velocity $v_s$ is greater than the final velocity $v_e$ and the final velocity $v_e$ is zero, the velocity is first decelerated to a certain velocity V1 at the maximum decelerated deceleration $J_{max}$, then is decelerated to a certain velocity V2 at the maximum deceleration A, and is finally decelerated to zero at the maximum decelerated deceleration. Wherein: $Ts = sqrt(2 \times (v_s - V1)/J_{max})$, $T_6 = (V1 - V2)/A$, $T_7 = sqrt(2 \times V2/J_{max})$. The time required for stopping is $T_5 + T_6 + T_7$, and the shorter the time required, the greater the impact, and the values of V1 and V2 can thus be adjusted to obtain the required trajectory according to the requirements for time and impact in practice.

Thus, it is a compromise scheme in which the deceleration section planning is performed in the above-mentioned four planning methods, to balance the impact with the time, so that the time required is shorter than the S-shaped planning method and the impact thereof is smaller than the trapezoidal planning method.

In addition, other planning methods can also be used to plan the duration of the deceleration section, and it should be noted that the uniformly accelerated deceleration section, the uniform deceleration section and the uniform decelerated deceleration section can be planned or combined in different ways according to different application scenarios or user requirements. For example, the embodiment of the present application shows the uniformly accelerated deceleration section first, then the uniform deceleration section, and finally the uniformly decelerated deceleration section; or some sections may be absent, such as there is only a uniformly accelerated deceleration section or a uniformly decelerated deceleration section, etc.; or the sequence can also be adjusted according to different requirements, such as firstly a uniformly decelerated deceleration section, then a uniform deceleration section, and finally a uniformly accelerated deceleration section, which is not limited by the embodiments of the present application.

The following describes planning of a uniform velocity section of the motion trajectory provided by an embodiment of the present application.

The duration of the uniform velocity section of the motion trajectory provided by the embodiment of the present application can be specifically planned by:

step 1: under the condition that a sum of a first total travel distance $S_1$ and a second total travel distance $S_2$ is less than a straight line total distance P from a starting point to an end point, a uniform velocity section distance is determined from the sum of a first total travel distance $S_1$ and the second total travel distance $S_2$ and the straight line total distance P.

Specifically, the uniform velocity section distance is equal to a distance obtained by subtracting the straight line total distance P from the sum of a first total travel distance $S_1$ and the second total travel distance $S_2$.

If an acceleration section is planned for the first motion trajectory, the first total travel distance $S_1$ is specifically determined by the following formula:

$$S_1 = v_s \times (T_1 + T_2 + T_3) + \left(\frac{1}{6}\right) \times J_1 \times T_1^3 + \left(\frac{3}{2}\right) \times J_1 \times T_1^2 \times T_2 + \left(\frac{1}{2}\right) \times J_1 \times T_1 \times$$

$$T_2^2 + \left(\frac{1}{2}\right) \times J_1 \times T_1^3 + \left(\frac{1}{3}\right) \times |J_3| \times T_3^3$$

wherein $T_1$, $T_2$ and $T_3$ are respectively durations of a uniformly accelerated acceleration section, a uniform acceleration section and a uniformly decelerated acceleration section, $J_1$ is a preset accelerated acceleration of the uniformly accelerated acceleration section, and $J_3$ is a preset accelerated acceleration of the uniformly decelerated acceleration section.

If a deceleration section is planned for second motion trajectory, the second total travel distance $S_2$ is specifically determined by the following formula:

$$S_2 = v_e \times (T_5 + T_6 + T_7) + (1/6) \times J_7 \times T_7^3 + (3/2) \times J_7 \times T_7^2 \times T_6 + (1/2) \times$$

$$J_7 \times T_7 \times T_6^2 + (1/2) \times J_7 \times T_7^3 + (1/3) \times |J_5| \times T_5^3$$

wherein $T_5$, $T_6$ and $T_7$ are respectively durations of a uniformly accelerated deceleration section, a uniform deceleration section and a uniformly decelerated deceleration section, $J_5$ is a preset accelerated acceleration of a uniformly accelerated deceleration section, and $J_7$ is a preset accelerated acceleration of a uniformly decelerated acceleration section.

Step 2: determining the duration of the uniform velocity section from the maximum planned velocity and the uniform velocity section distance.

Specifically, the duration of the uniform velocity section is a result obtained by dividing the uniform velocity section distance by the maximum planned velocity.

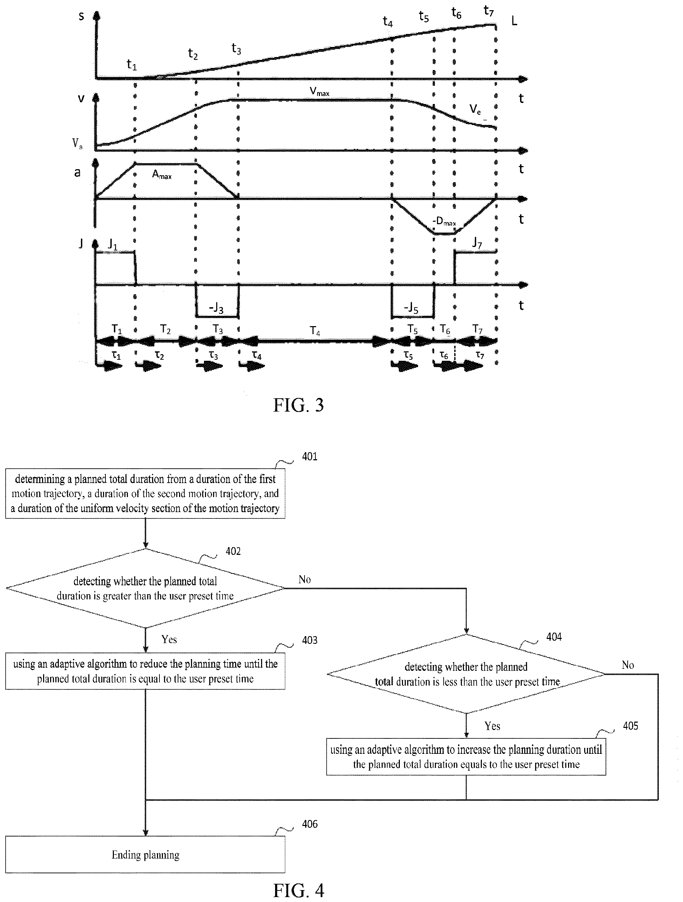

Illustratively, taking both $A_s$ and $A_e$ being zero as an example, in the complete trajectory planning corresponding to planning method 1 of the acceleration section, planning method 1 of the deceleration section and planning of the uniform velocity section, the planned motion trajectory will present a complete seven-section S-curve velocity profile; as shown in the schematic diagram of FIG. 3 showing motion trajectory planning provided by an embodiment of the present application, the variation curve of displacement s with time t, the variation curve of velocity V with time t, the variation curve of acceleration a with time t and the variation curve of accelerated acceleration J with time t have all been shown, wherein $T_1$,..., $T_7$ respectively represent a duration of the uniformly accelerated acceleration section; a duration of the uniform acceleration section, a duration of the uniformly decelerated acceleration section, a duration of the uniform velocity section, a duration of the uniformly accelerated deceleration section, a duration of the uniform deceleration section and a duration of the uniformly decelerated deceleration section, $\tau_1$,..., $\tau_7$ respectively represent each time instant within the corresponding duration, $t_1$,..., $t_7$ respectively represent the end point time of the corresponding duration, $J_1$, $J_3$, $J_5$ and $J_7$ respectively represent a preset accelerated acceleration of a uniformly accelerated acceleration section, a preset accelerated acceleration of a uniformly decelerated acceleration section, a preset accelerated acceleration of uniformly accelerated deceleration section, and a preset accelerated acceleration of uniformly decelerated deceleration section, and $A_{max}$ and $-D_{max}$ respectively represent the maximum preset acceleration of the acceleration section and the maximum preset acceleration of the deceleration section, $v_s$ is a initial velocity at the starting point, $v_e$ is a final velocity at the end point, and $V_{max}$ is a maximum travel velocity.

It should be noted that the acceleration section, the deceleration section and the uniform velocity section provided in the embodiments of the present application can be planned or combined in different ways according to different application scenarios or user requirements, for example, the embodiment of the present application shows the acceleration section first, then the uniform velocity section, and finally the deceleration section; or some sections may be absent, such as only an acceleration section or a deceleration section; alternatively, the sequence can be adjusted according to different requirements, for example, firstly a deceleration section, then a uniform velocity section and finally an acceleration section, which is not limited in the embodiments of the present application.

As such, motion trajectory planning is performed using the method provided in the above-mentioned first embodiment, parameters that meet user settings as much as possible and through which the trajectory planning can also be completed can be found, thereby avoiding the situation that trajectory planning cannot be completed because there is no solution, and improving the adaptability, and the apparatus can meet the requirements of more scenarios.

Embodiment 2:

Under the condition that the motion path is a straight line path from the starting point to the end point, another method for planning motion trajectory based on an S-curve velocity profile according to the embodiment of the present application, after planning the duration of the first motion trajectory, the duration of the second motion trajectory and the duration of the uniform velocity section of a robot motion trajectory, referring to a workflow schematic diagram shown in FIG. 4, further comprises the following steps to be executed:

step S401: determining a planned total duration from a duration of the first motion trajectory, a duration of the second motion trajectory, and a duration of the uniform velocity section of the motion trajectory.

Specifically, the planning method of the first motion trajectory, the second motion trajectory, and the uniform velocity section may be planned with reference to the respective manners provided in Embodiment 1, which is not limited by the embodiments of the present application.

Step S402: detecting whether the planned total duration is greater than the user preset time. If the planned total duration is longer than the user preset time, perform step S403; and if the planned total duration is less than or equal to the user preset time, perform step S404.

Step S403: using an adaptive algorithm to reduce the planning time until the planned total duration is equal to the user preset time. Perform Step S406.

Step S404: detecting whether the planned total duration is less than the user preset time. If the planned total duration is less than the user preset time; perform step S405; otherwise, perform step S406.

Step S405: using an adaptive algorithm to increase the planning duration until the planned total duration equals to the user preset time. Perform Step S406.

Step S406: ending the planning.

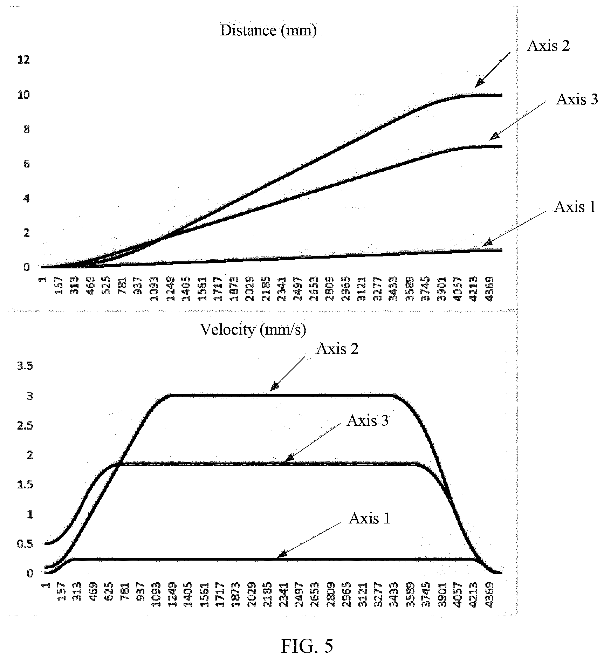

In order to more clearly illustrate Embodiment 2, FIG. 5a and FIG. 5b schematically show an effect of motion trajectory planning using another method for planning a motion trajectory based on an S-curve velocity profile provided by an embodiment of the present application. Illustratively, the parameters used for each of axis 1, axis 2 and axis 3 are as shown in the following table.

| Parameter name | Parameter value | | |
| --- | --- | --- | --- |
| | Axis 1 | Axis 2 | Axis 3 |
| Initial velocity | 0 | 0.1 | 0.5 |
| Final velocity | 0 | 0 | 0 |
| System maximum velocity | 5 | 10 | 15 |
| Maximum acceleration | 10 | 10 | 10 |
| Maximum accelerated acceleration | 10 | 10 | 10 |
| Travel distance | 1 | 10 | 7 |
| User set velocity | 2 | 3 | 5 |
| User set acceleration | 5 | 3 | 2 |
| User set deceleration | 1 | 5 | 6 |

As shown in FIG. 5, axis 1, axis 2 and axis 3 use different parameters and planning methods to perform motion trajectory planning, and the obtained distance change curves with time and velocity change curves with time are different, but the planned total durations are the same, so that it can ensure that three axes start and end simultaneously.

By using the method for a planning motion trajectory provided by the embodiments of the present application, it can ensure that the planned motion trajectory runs at the user set time, solve the problem that the traditional trajectory planning cannot set the travel time, and thus is better applicable to the multi-axis synchronous trajectory planning and other application scenarios requiring the trajectory planning of a specified motion time.

The method for planning a motion trajectory based on an S-curve velocity profile according to another embodiment of the present application is described below with reference to the accompanying drawings. A method for planning motion trajectory based on an S-curve velocity profile according to another embodiment of the present application, after determining a motion path of a robot from a starting point to an end point, is directed to a case where the motion path is not a straight line path from the starting point to the end point, and there is any target point which is a point outside a straight line between the starting point and the end point.

Embodiment 3:

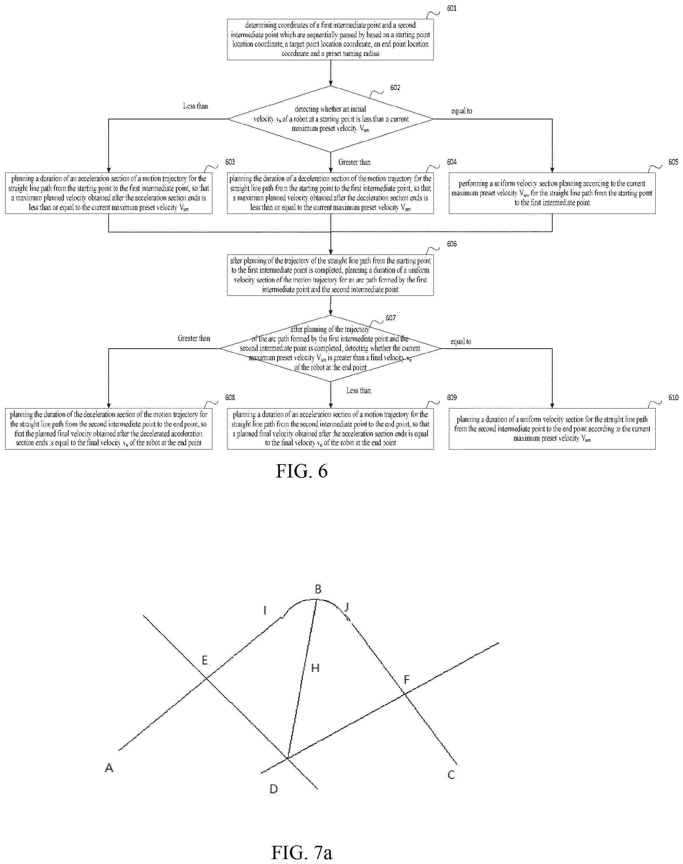

According to a method for planning motion trajectory based on an S-curve velocity profile provided by another embodiment of the present application, under the condition that the motion path is not a straight line path from the starting point to the end point and there is any target point, in another embodiment of the present application, the motion path of a robot is sectioned firstly, and then motion trajectory planning is planned for each section of the straight line path, referring the workflow schematic diagram shown in FIG. 6, the method specifically includes the following steps:

step 601: determining coordinates of a first intermediate point and a second intermediate point which are sequentially passed by based on a starting point location coordinate, a target point location coordinate, an end point location coordinate and a preset turning radius.

The target point is any point located outside the line connecting the starting point and the end point.

step 602: detecting whether an initial velocity $v_s$ of a robot at a starting point is less than a current maximum preset velocity $V_{sm}$. If it less than, perform step 603; if it is greater than, perform step 604, and if it is equal, perform step 605.

Step 603: planning a duration of an acceleration section of a motion trajectory for the straight line path from the starting point to the first intermediate point, so that a maximum planned velocity obtained after the acceleration section ends is less than or equal to the current maximum preset velocity $V_{sm}$.

Step 604: planning the duration of a deceleration section of the motion trajectory for the straight line path from the starting point to the first intermediate point, so that a maximum planned velocity obtained after the deceleration section ends is less than or equal to the current maximum preset velocity $V_{sm}$.

Step 605: performing a uniform velocity section planning according to the current maximum preset velocity $V_{sm}$ for the straight line path from the starting point to the first intermediate point.

After performing steps 603, 604 or 605, the method for planning motion trajectory based on an S-curve velocity profile provided by another embodiment of the present application further includes:

step 606: after planning of the trajectory of the straight line path from the starting point to the first intermediate point is completed, planning a duration of a uniform velocity section of the motion trajectory for an arc path formed by the first intermediate point and the second intermediate point.

The velocity of the uniform velocity section is a maximum planned velocity obtained after planning of the trajectory of the straight line path from the starting point to the first intermediate point ends, and the radius of the arc path is a preset turning radius.

Step 607: after planning of the trajectory of the arc path formed by the first intermediate point and the second intermediate point is completed, detecting whether the current maximum preset velocity $V_{sm}$ is greater than a final velocity $v_e$ of the robot at the end point. If it is greater than, perform step 608; if it is less than, perform step 609; and if it is equal, perform step 610.

Step 608: planning the duration of the deceleration section of the motion trajectory for the straight line path from the second intermediate point to the end point, so that the planned final velocity obtained after the decelerated acceleration section ends is equal to the final velocity $v_e$ of the robot at the end point.

Step 609: planning a duration of an acceleration section of a motion trajectory for the straight line path from the second intermediate point to the end point, so that a planned final velocity obtained after the acceleration section ends is equal to the final velocity $v_e$ of the robot at the end point.

Step 610: planning a duration of a uniform velocity section for the straight line path from the second intermediate point to the end point according to the current maximum preset velocity $V_{sm}$.

Specifically, before performing step 601, another embodiment of the present application provides a method for planning a motion trajectory based on an S-curve velocity profile, the method further including:

detecting whether the target point is a waypoint of the robot.

Specifically, depending on whether the target point is a waypoint of the robot, step 601 includes the following two implementation methods:

Implementation method 1:

if the target point is a waypoint of the robot, and referring to the motion path schematic diagram shown in FIG. 7(a), in which in a two-dimensional space, A is a starting point, C is an end point, a target point B is a waypoint, I is a first intermediate point passed by first, and J is a second intermediate point passed by next, step 601 specifically further comprises the following:

determining the coordinates of the first intermediate point I specifically by the following formula:

$$\begin{cases} I_y = \left( -G \pm \sqrt{(G^2 - 4 \times F \times H)} / 2 / F \right) \\ I_x = C/A + B/A \times I_y \end{cases}$$

wherein, $I_x$ and $I_y$ are coordinates of the first intermediate point I, $A=B_y-A_y$, $B= B_x-A_x$, $C=B_x(B_y-A_y)$ $-By(B_x-A_x)$, $G=2D\times E-2H_y$, $D=Hx-C/A$, $E=-B/A$, $H=D^2+H^2_y-R^2$, $F=E^2+1$, $A_x$ and $A_y$ are coordinates of the starting point A, $B_x$ and $B_y$ are coordinates of the target point B, $H_x$ and $H_y$ are coordinates of the first circle center H, and R is a preset turning radius.

determining the coordinates of the second intermediate point J specifically by the following formula:

$$\begin{cases} J_y = \left(-G \pm \sqrt{(G^2 - 4 \times F \times H)}/2/F\right) \\ I_x = C/A + B/A \times J_y \end{cases}$$

wherein, $J_x$ and $J_y$ are coordinates of the second intermediate point J, $A=C_y-B_y$, $B=C_x-B_x$, $C=C_x(C_y-B_y)-C_y(C_x-B_x)$, $G=2D\times E-2H_y$, $D=Hx-C/A$, $E=-B/A$, $H=D^2+H^2_y-R^2$, $F=E^2+1$, $C_x$ and $C_y$ are coordinates of the end point C, $B_x$ and $B_y$ are coordinates of the target point B, $H_x$ and $H_y$ are coordinates of the first circle center point H, and R is a preset turning radius.

Coordinates of the first intermediate point I, coordinates of the second intermediate point J and coordinates of the first circle center point H are specifically derived from the following ideas:

(1) Coordinates of an intersection point D of an angular bisector BD and AC are obtained by:

assuming that the length of AB is $l_{ab}$, the length of BC is $l_{bc}$, $A_x$, $A_y$ are coordinates of the starting point A, and $C_x$, $C_y$ are coordinates of the end point C, according to the formula of definite proportion, coordinates of point D are obtained as follows:

$$\begin{cases} D_x = (l_{bc} \times A_x + l_{ab} \times C_x)/(l_{bc} + l_{ab}) \\ D_y = (l_{bc} \times A_y + l_{ab} \times C_y)/(l_{bc} + l_{ab}) \end{cases}$$

(2) calculating coordinates of a foot point E from D to AB and a foot point F from D to BC:

$(D_x-E_x)\times(A_x-B_x)+(D_y-E_y)\times(A_y-B_y) =0$ can be obtained according to DE $\perp$ AB:

$(A_x-E_x)/(A_x-B_x)= (A_y-E_y)/(A_y-B_y) =k$ can be obtained from E being on a straight line AB, and vector AE and AB being collinear.

$k=-((A_x - D_x)\times(B_x -A_x) + (A_y - D_y)\times(B_y -A_y)) / ((B_x - A_x)^2 + (B_y -A_y)^2)$ can be solved from the above equations, and then it can be obtained that coordinates of the foot point E are as follows:

$$\begin{cases} E_x = k \times (B_x - A_x) + A_x \\ E_y = k \times (B_y - A_y) + A_y \end{cases}$$

similarly, coordinates of the foot point F can be obtained as follows:

$$\begin{cases} F_x = k' \times (C_x - B_x) + B_x \\ F_y = k' \times (C_y - B_y) + B_y \end{cases}$$

wherein, $k'=-((C_x - D_x)\times(B_x - C_x) + (C_y - D_y)\times(B_y - C_y)) / ((B_x - C_x)^2 + (B_y - C_y)^2)$.

(3) calculating coordinates of the first intermediate point I, coordinates of the second intermediate point J and coordinates of the first circle center point H:

Since the point H is on BD, the equation $(B_x-H_x)/(B_x-D_x)= (B_y-H_y)/(B_y-D_y)$ is obtained, and $(B_x-H_x)^2 + (B_y-H_y)^2 = R^2$ is obtained with knowing BH distance = preset turning radius R.

By combining the above equations, let $A=B_y-D_y$, $B=B_x-D_x$, $C=B_x(B_y-D_y)-B_y(B_x-D_x)$, $D=B_x-C/A$, $E=-B/A$, $F=E^2+1$, $G=2D\times E-2B_y$, $H=D^2+B^2_y-R^2$, coordinates of the first circle center point H can be solved as follows:

$$\begin{cases} H_y = \left(-G \pm \sqrt{(G^2 - 4 \times F \times H)}/2/F\right) \\ H_x = B/A \times H_y + C/A \end{cases}$$

According to I being on AB, the equation $(B_x-I_x)/(B_x-A_x)= (B_y-I_y)/(B_y-A_y)$ can be obtained, $(I_x-H_x)^2 + (I_y-H_y)^2 = R^2$ can be obtained with knowing HI distance = R, simultaneous with the above equations, let $A= B_y-A_y$, $B= B_x-A_x$, $C=B_x(B_y-A_y)$ $-B_y(B_x-A_x)$, $G=2D\times E-2H_y$, $D=Hx-C/A$, $E=-B/A$, $H=D^2 + H^2_y-R^2$, $F=E^2+1$, finally coordinates of the aforementioned first intermediate point I can be solved.

Similarly, let $A= C_y-B_y$, $B= C_x-B_x$, $C=C_x(C_y-B_y) -C_y(C_x-B_x)$, $G=2D\times E-2H_y$, $D=H_x-C/A$, $E=-B/A$, $H=D^2+H^2_y-R^2$, $F=E^2+1$, finally coordinates of the aforementioned second intermediate point J can be solved.

(4) For an arc path IBJ formed by the first intermediate point and the second intermediate point, since the section planning is about a uniform tangential linear velocity motion, the total travel time $t_f$ = IBJ arc length/velocity v, and according to a sampling period, each sampling time point and the location of the arc length of the motion can be equally divided, so as to obtain point coordinates corresponding to each period, thereby completing a trajectory equation.

By performing Step 601 using the above-mentioned implementation method 1, an arc trajectory can be planned, so that the robot can certainly pass through a user set target point, thereby making the trajectory of the robot more controllable, and further solving the problem that traditional trajectory planning can only plan a straight line.

Implementation method 2:

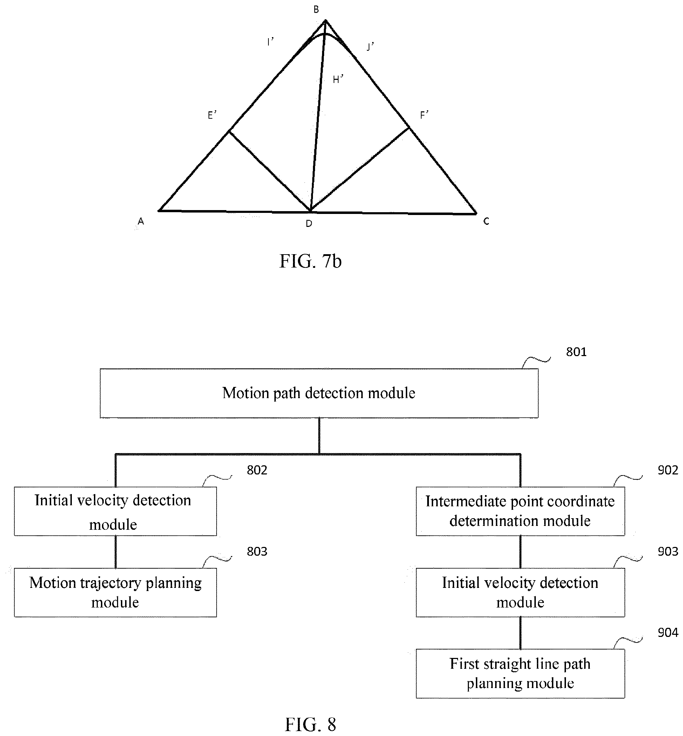

if the target point is not a waypoint of the robot, and referring to the motion path diagram shown in FIG. 7(b), in which in a three-dimensional space, A is a starting point, C is an end point, a target point B is a point to be avoided, I' is a first intermediate point passed by first, and J' is a second intermediate point passed by next, step 601 specifically further comprises the following:
determining the coordinates $I_x$, $I_y$, $I_z$ of the first intermediate point I' specifically by the following formula:

$$\begin{cases} I_x = (B_x + k \times E_x)/(1 + k) \\ I_y = (B_y + k \times E_y)/(1 + k) \\ I_z = (B_z + k \times E_z)/(1 + k) \end{cases}$$

wherein, $B_x$, $B_y$, and $B_z$ are coordinates of the target point B, $k = R/(DE-R)$, R is a preset turning radius, DE is a length of the section DE', and $E_x$, $E_y$, and $E_z$ are coordinates of the foot point E' from D to AB.
determining the coordinates $J_x$, $J_y$, and $J_z$ of the second intermediate point J' specifically by the following formula:

$$\begin{cases} J_x = (B_x + k \times F_x)/(1 + k) \\ J_y = (B_y + k \times F_y)/(1 + k) \\ J_z = (B_z + k \times F_z)/(1 + k) \end{cases}$$

wherein, $B_x$, $B_y$, and $B_z$ are coordinates of the target point B, $k = R/(DE-R)$, R is a preset turning radius, DE is a length of the section DE', and $F_x$, $F_y$, and $F_z$ are coordinates of the foot point F' from D to BC.

Coordinates of the first intermediate point I', coordinates of the second intermediate point J' and coordinates of the second circle center point H' are specifically derived from the following idea:

(1) Coordinates of an intersection point D of an angular bisector BD and AC are obtained by:
assuming that the length of AB is $l_{ab}$, the length of BC is $l_b$, $A_x$, $A_y$, and $A_z$ are coordinates of the starting point A, and $C_x$, $C_y$, and $C_z$ are coordinates of the end point C, according to the formula of definite proportion, coordinates of point D are obtained as follows:

$$\begin{cases} D_x = (l_{bc} \times A_x + l_{ab} \times C_x)/(l_{bc} + l_{ab}) \\ D_y = (l_{bc} \times A_y + l_{ab} \times C_y)/(l_{bc} + l_{ab}) \\ D_z = (l_{bc} \times A_z + l_{ab} \times C_z)/(l_{bc} + l_{ab}) \end{cases}$$

(2) calculating coordinates of a foot point E' from D to AB and a foot point F' from D to BC:

$(D_x-E_x)\times(A_x-B_x)+(D_y-E_y)\times(A_y-B_y)+ (D_z-E_z)\times(A_z-B_z)=0$ can be obtained according to DE' ⊥AB.

$(A_x-E_x)/(A_x-B_x)= (A_y-E_y)/(A_y-B_y)=(A_z-E_z)/(A_z-B_z)=k$ can be obtained from E' being on a straight line AB, and vector AE' and AB being collinear.

$k=-((A_x-D_x)\times(B_x-A_x)+(A_y-D_y)\times(B_y-A_y)+(A_z-D_z)\times(B_z-A_z))/ ((B_x-A_x)2+(B_y-A_y)2+(B_z-A_z)2)$ can be solved from the above equations, and then it can be obtained that coordinates of the foot point E' are as follows:

$$\begin{cases} E_x = k \times (B_x - A_x) + A_x \\ E_y = k \times (B_y - A_y) + A_y \\ E_z = k \times (B_z - A_z) + A_z \end{cases}$$

similarly, coordinates of the foot point F' can be obtained as follows:

$$\begin{cases} F_x = k' \times (B_x - C_x) + C_x \\ F_y = k' \times (B_y - C_y) + C_y \\ F_z = k' \times (B_y - C_y) + C_y \end{cases}$$

Wherein, $k' =-((C_x-D_x)\times(B_x-C_x)+(C_y-D_y)\times(B_y-C_y)+(C_z-D_z)\times(B_z-C_z))/((B_x-C_x)\times(B_x-C_x)+(B_y-C_y)\times(B_y-C_y) +(B_z-C_z)\times(B_z-C_z))$.

(3) calculating coordinates of the first intermediate point I', coordinates of the second intermediate point J' and coordinates of the second circle center point H':

According to the definite proportion formula DE'/H'I'=BD/BH'=1+k, coordinates of the second circle center point H' are obtained, wherein H'I'=R, k = R / (DE - R), and coordinates of the second circle center H' point are solved as follows:

$$\begin{cases} H_x = (B_x + k \times D_x)/(1 + k) \\ H_y = (B_y + k \times D_y)/(1 + k) \\ H_z = (B_z + k \times D_z)/(1 + k) \end{cases}$$

wherein $D_x$, $D_y$, and $D_z$ are coordinates of an intersection point D of angular bisectors BD and AC.

Finally, coordinates of the aforementioned first intermediate point I' and coordinates of the second intermediate point J' can be solved.

By performing Step 601 using the above-mentioned implementation method 2, a smoother arc trajectory can be planned, with the velocity and acceleration not being changed suddenly, so that the robot can smoothly avoid the user set target point, and further complete the trajectory planning of the robot to avoid obstacles, thereby matching a scenario with a set motion path better.

Specifically, in steps 603 and 609, planning can be performed by referring to various planning methods for the acceleration section provided in Embodiment 1, such as sequentially planning the uniformly accelerated acceleration section and the uniformly decelerated acceleration section, and then planning the uniform acceleration section according to the current maximum planned velocity after the uniformly decelerated acceleration section ends, or directly planning any one of the uniformly accelerated acceleration section, the uniform acceleration section and the uniformly decelerated acceleration section, which will not be described in detail herein.

In step 606, according to coordinates of the first intermediate point and coordinates of the second intermediate point, and a preset turning radius, uniform velocity section planning is performed after the length of an arc path or a trajectory equation formed by the first intermediate point and the second intermediate point are calculated.

In steps 604 and 608, the planning can be performed by referring to various planning methods for the deceleration section provided in Embodiment 1 mentioned above, such as sequentially planning the uniformly accelerated deceleration section and the uniformly decelerated deceleration section, and then planning the uniform deceleration section according to the current planned final velocity after the uniformly decelerated deceleration section ends, or directly planning any one of the uniformly accelerated deceleration section, the uniform deceleration section and the uniformly decelerated deceleration section, which will not be described in detail herein.

As such, the motion trajectory is planned using the method provided in the above-mentioned third embodiment, so that an arc trajectory can be planned to avoid an obstacle or reach a certain intermediate point, thereby overcoming the problem that the conventional trajectory planning can only plan a linear motion.

It should be noted that, according to various embodiments provided in the present application, various planning methods of an acceleration section, a deceleration section and a uniform velocity section under different motion paths provided by various embodiments of the present application can all be combined or split in different ways according to different application scenarios or user requirements, which is not limited by the embodiments of the present application. In practice, a complex motion path can also be split, i.e., the key points are intercepted in the complex motion path, and different trajectory planning methods are applied between each two points, for example, for some trajectory sections, the shortest time is preferable, and obstacles need to be avoided for turning, etc., that is to say, the key points in the motion path can be sought, and each section is planned respectively by using different trajectory planning methods, and finally trajectory satisfying requirements is obtained by merging the trajectories in practice, so as to be able to adapt to the requirements in practice in a larger range.

The apparatus according to embodiments of the present application will be described below, which may be used to perform method according to embodiments of the present application. For details not disclosed in the apparatus embodiments of the present application, reference may be made to the method embodiments of the present application.

As an implementation of the above embodiments, the embodiments of the present application provide an apparatus for planning a motion trajectory based on an S-curve velocity profile. Referring to the schematic structural diagram shown in FIG. 8, the apparatus for planning a motion trajectory based on an S-curve velocity profile disclosed in an embodiment of the present application may include: a motion path detection module 801, an initial velocity detection module 802 and a motion trajectory planning module 803; in addition, the apparatus may further include more or less units and modules, such as a final velocity detection module, a uniform velocity section planning module and a planning duration control module, and the structure of the apparatus is not limited to this embodiment .

The motion path detection module 801 is configured to determine a motion path of the robot from a starting point to an end point.

The initial velocity detection module 802 is configured to, if the motion path is a straight line path from the starting point to the end point, detect whether an initial velocity $v_s$ of a robot at the starting point is less than a current maximum preset velocity $V_{sm}$.

The motion trajectory planning module 803 is configured to, if the initial velocity $v_s$ is less than the current maximum preset velocity $V_{sm}$, plan a duration of an acceleration section for a first motion trajectory from the initial velocity $v_s$ to the current maximum preset velocity $V_{sm}$, so that a maximum planned velocity obtained after the acceleration section ends is less than or equal to the current maximum preset velocity $V_{sm}$.

Alternatively, in some embodiments, the motion trajectory planning module 803 includes:
an acceleration section planning submodule configured to:

detect whether an initial acceleration $A_s$ of the robot at the starting point is less than the maximum preset acceleration $A_{sma}$ of the acceleration section;
if the initial acceleration $A_s$ is less than the maximum preset acceleration $A_{sma}$ of the acceleration section, sequentially plan durations of a uniformly accelerated acceleration section and a uniformly decelerated acceleration section of the acceleration section;
acquire a current maximum planned velocity $V_{rs}$ after the uniformly decelerated acceleration section ends; and
if the current maximum planned velocity $V_{rs}$ is less than or equal to the current maximum preset velocity $V_{sm}$, plan a duration of a uniform acceleration section of the acceleration section.

Alternatively, in some embodiments, the acceleration section planning submodule is further configured to, if the current maximum planned velocity $V_{rs}$ is greater than the current maximum preset velocity $V_{sm}$, replan the durations of the uniformly accelerated acceleration section and the uniformly decelerated acceleration section.

Alternatively, in some embodiments, the motion trajectory planning module 803 is further configured to, if the initial velocity $v_s$ is greater than the current maximum preset velocity $V_{sm}$, plan a duration of a deceleration section for the first motion trajectory from the initial velocity $v_s$ to the current maximum preset velocity $V_{sm}$, so that the maximum planned velocity obtained after the deceleration section ends is less than or equal to the current maximum preset velocity $V_{sm}$.

Alternatively, in some embodiments, the apparatus further includes:
a final velocity detection module configured to, after the planning of the first motion trajectory from the initial velocity $v_s$ to the current maximum preset velocity $V_{sm}$ is completed, detect whether the current maximum preset velocity $V_{sm}$ is less than a final velocity $v_e$ of the robot at the end point.

The motion trajectory planning module 803 is further configured to, if the current maximum preset velocity $V_{sm}$ is less than the final velocity $v_e$, plan a duration of an acceleration section for a second motion trajectory from the current maximum preset velocity $V_{sm}$ to the final velocity $v_e$, so that a planned final velocity obtained after the acceleration section ends is equal to the final velocity $v_e$ of the robot at the end point.

Alternatively, in some embodiments, the motion trajectory planning module 803 is further configured to, if the current maximum preset velocity $V_{sm}$ is greater than the final velocity $v_e$, plan a duration of a deceleration section for the second motion trajectory from the current maximum preset velocity $V_{sm}$ to the final velocity $v_e$, so that a planned final velocity obtained after the deceleration section ends is equal to the final velocity $v_e$ of the robot at the end point.

Alternatively, in some embodiments, the motion trajectory planning module 803 further includes:
a deceleration section planning sub-module configured to:

> sequentially plan durations of a uniformly accelerated deceleration section and a uniformly decelerated deceleration section of the deceleration section;
> acquire a current planned final velocity $V_{re}$ after the uniformly decelerated deceleration section ends; and
> if the current planned final velocity $V_{re}$ is greater than or equal to the final velocity $v_e$, plan a duration of a uniform deceleration section of the deceleration section.

Alternatively, in some embodiments, the deceleration section planning submodule is further configured to, if the current planned final velocity $V_{re}$ is less than the final velocity $v_e$, replan the durations of the uniformly accelerated deceleration section and the uniformly decelerated deceleration section.

Alternatively, in some embodiments, the apparatus further includes:

> a uniform velocity section planning module configured to,
> if a sum of a first total travel distance $S_1$ from the initial velocity $v_s$ to the current maximum preset velocity $V_{sm}$ and a second total travel distance $S_2$ from the current maximum preset velocity $V_{sm}$ to the final velocity $v_e$ is less than a straight line total distance P from the starting point to the end point, plan a duration of a uniform velocity section of a motion trajectory, the uniform velocity section being a part of the motion trajectory except the first motion trajectory and the second motion trajectory.

Alternatively, in some embodiments, the uniform velocity section planning module is specifically configured to,

> determine a uniform velocity section distance from the sum of the first total travel distance $S_1$ and the second total travel distance $S_2$, and the straight line total distance P; and
> determine the duration of the uniform velocity section from the maximum planned velocity and the uniform velocity section distance.

Alternatively, in some embodiments, the uniform velocity section planning module is further configured to, if the sum of a first total travel distance $S_1$ from the initial velocity $v_s$ to the current maximum preset velocity $V_{sm}$ and a second total travel distance $S_2$ from the current maximum preset velocity $V_{sm}$ to the final velocity $v_e$ is greater than the straight line total distance P from the starting point to the end point, replan the duration of the first motion trajectory and the duration of the second motion trajectory of the motion trajectory.

Alternatively, in some embodiments, the apparatus further includes:

> a planning duration control module configured to,
> determine a planned total duration from the duration of the first motion trajectory, the duration of the second motion trajectory, and the duration of the uniform velocity section of the motion trajectory; and
> if the planned total duration is equal to a user preset time, end planning.

Alternatively, in some embodiments, the current maximum preset velocity $V_{sm}$ is a velocity value which is a smaller velocity value between a system maximum velocity of the robot and a user set maximum travel velocity.

As such, according to the apparatus for planning a motion trajectory provided in the embodiments of the present application, parameters that meet user settings as much as possible and through which trajectory planning can also be completed can be found according to system parameters and user set parameters, thereby avoiding the situation that trajectory planning cannot be completed because there is no solution, improving the adaptability, and meeting the requirements of more scenarios.

In another embodiment of the present application, an apparatus for planning a motion trajectory based on an S-curve velocity profile is provided. Referring to the schematic structural diagram shown in FIG. 8, in one embodiment of the present application, the apparatus for planning a motion trajectory based on an S-curve velocity profile may include: a motion path detection module 801, an intermediate point coordinate determination module 902, an initial velocity detection module 903 and a first straight line path planning module 904; in addition, the apparatus may further include more or less units and modules, such as an arc path planning module, a final velocity detection module, a second straight line path planning module and a waypoint detection module, and the apparatus is not limited thereto.

The motion path detection module 901 is configured to determine a motion path of the robot from a starting point to an end point.

The intermediate point coordinate determination module 902 is configured to, if the motion path is not a straight line path from the starting point to the end point and there is any target point which is a point outside a straight line between the starting point and the end point, determine coordinates of the first intermediate point and coordinates of the second intermediate point which are sequentially passed by based on a starting point location coordinate, a target point location coordinate, an end point location coordinate and a preset turning radius.

The initial velocity detection module 903 is configured to detect whether an initial velocity $v_s$ of a robot at a starting point is less than a current maximum preset velocity $V_{sm}$.

The first straight line path planning module 904 is configured to, if the initial velocity $v_s$ is less than the current maximum preset velocity $V_{sm}$, plan a duration of an acceleration section of a motion trajectory for a straight line path from the starting point to the first intermediate point, so that the maximum planned velocity obtained after the acceleration section ends is less than or equal to the current maximum preset velocity $V_{sm}$.

Alternatively, in some embodiments, the first straight line path planning module 904 is further configured to, if the initial velocity $v_s$ is greater than the current maximum preset velocity $V_{sm}$, plan a duration of a deceleration section of a motion trajectory for the straight line path from the starting point to the first intermediate point, so that the maximum planned velocity obtained after the deceleration section ends is less than or equal to the current maximum preset velocity $V_{sm}$.

Alternatively, in some embodiments, the apparatus further includes:

an arc path planning module configured to, after planning the trajectory of the straight line path from the starting point to the first intermediate point is completed, plan a duration of a uniform velocity section of the motion trajectory for an arc path formed by the first intermediate point and the second intermediate point, the velocity of the uniform velocity section being the maximum planned velocity obtained after planning the trajectory of the straight line path from the starting point to the first intermediate point ends, and a radius of the arc path being the preset turning radius.

Alternatively, in some embodiments, the apparatus further includes:

a final velocity detection module configured to, after planning the trajectory of the arc path formed from the first intermediate point and the second intermediate point is completed, detect whether the current maximum preset velocity $V_{sm}$ is greater than a final velocity $v_e$ of the robot at the end point; and

a second straight line path planning module configured to, if the current maximum preset velocity $V_{sm}$ is greater than the final velocity $v_e$, plan a duration of a deceleration section of a motion trajectory for the straight line path from the second intermediate point to the end point, so that a planned final velocity obtained after the deceleration section ends is equal to the final velocity $v_e$ of the robot at the end point.

Alternatively, in some embodiments, the second straight line path planning module is further configured to, if the current maximum preset velocity $V_{sm}$ is less than the final velocity $v_e$, plan a duration of an acceleration section of a motion trajectory for the straight line path from the second intermediate point to the end point, so that a planned final velocity obtained after the acceleration section ends is equal to the final velocity $v_e$ of the robot at the end point.

Alternatively, in some embodiments, between the motion path detection module 801 and the intermediate point coordinate determination module 902, the apparatus further includes:

a waypoint detection module configured to detect whether a target point is a waypoint of a robot.

Thus, embodiments of the present application provide an apparatus for planning a motion trajectory that can plan an arc trajectory to avoid an obstacle or reach an intermediate point, overcoming the problem that conventional trajectory planning can only plan a linear motion.

The same and similar parts among the various embodiments of the present specification may be referred to one another, and each embodiment is described with emphasis on differences from the other embodiments. Especially for the apparatus and system embodiment, since it is substantially similar to the method embodiment, the description is relatively simple, and reference may be made to the partial description of the method embodiment for relevant points.

A person skilled in the art will readily appreciate that the techniques of the embodiments of the present invention may be implemented using software plus any required general purpose hardware platform. Based on such understanding, the technical solutions in the embodiments of the present invention may be substantially or partially embodied in the form of a software product, which may be stored in a storage medium, such as an ROM/RAM, a magnetic disk, an optical disk, or the like, and includes several instructions for enabling a computer device (which may be a personal computer, a server, or a network device) to execute the method according to the embodiments or some parts of the embodiments.

The above-described embodiments of the present application are not to be construed as limiting the scope of the present application.

**Claims**

1. A method for planning a motion trajectory based on an S-curve velocity profile, comprising:

   determining a motion path of a robot from a starting point to an end point;

   detecting whether an initial velocity $v_s$ of a robot at the starting point is less than a current maximum preset velocity $V_{sm}$ if the motion path is a straight line path from the starting point to the end point; and

   planning a duration of an acceleration section for a first motion trajectory from the initial velocity $v_s$ to the current maximum preset velocity $V_{sm}$, so that a maximum planned velocity obtained after the acceleration section ends is less than or equal to the current maximum preset velocity $V_{sm}$, if the initial velocity $v_s$ is less than the current maximum preset velocity $V_{sm}$.

2. The method according to claim 1, wherein the planning a duration of an acceleration section comprises:

   detecting whether an initial acceleration $A_s$ of the robot at the starting point is less than a maximum preset acceleration $A_{sma}$ of the acceleration section;

   sequentially planning durations of a uniformly accelerated acceleration section and a uniformly decelerated acceleration section of the acceleration section if the initial acceleration $A_s$ is less than the maximum preset acceleration $A_{sma}$ of the acceleration section;

   acquiring a current maximum planned velocity $V_{rs}$ after the uniformly decelerated acceleration section ends; and

   planning a duration of a uniform acceleration section of the acceleration section if the current maximum planned velocity $V_{rs}$ is less than or equal to the current maximum preset velocity $V_{sm}$.

3. The method according to claim 2, further comprising:

   replanning the durations of the uniformly accelerated acceleration section and the uniformly decelerated acceleration section if the current maximum planned velocity $V_{rs}$ is greater than the current maximum preset velocity $V_{sm}$.

4. The method according to claim 1, further comprising:

   planning a duration of a deceleration section for the first motion trajectory from the initial velocity $v_s$ to the current maximum preset velocity $V_{sm}$, so that a maximum planned velocity obtained after the deceleration section ends is less than or equal to the current maximum preset velocity $V_{sm}$, if the initial velocity $v_s$ is greater than the current maximum preset velocity $V_{sm}$.

5. The method according to claim 1 or 4, further comprising:

   detecting, after the planning of the first motion trajectory from the initial velocity $v_s$ to the current maximum preset velocity $V_{sm}$ is completed, whether the current maximum preset velocity $V_{sm}$ is less than a final velocity $v_e$ of the robot at the end point; and

   planning a duration of an acceleration section for a second motion trajectory from the current maximum preset velocity $V_{sm}$ to the final velocity $v_e$ of the robot at the end point, so that a planned final velocity obtained after the acceleration section ends is equal to the final velocity $v_e$, if the current maximum preset velocity $V_{sm}$ is less than the final velocity Ve.

6. The method according to claim 5, further comprising:

   planning a duration of a deceleration section for the second motion trajectory from the current maximum preset velocity $V_{sm}$ to the final velocity $v_e$ of the robot at the end point, so that a planned final velocity obtained after the deceleration section ends is equal to the final velocity $v_e$, if the current maximum preset velocity $V_{sm}$ is greater than the final velocity $v_e$.

7. The method according to claim 6, wherein the planning a duration of a deceleration section further comprises:

   sequentially planning durations of a uniformly accelerated deceleration section and a uniformly decelerated deceleration section of the deceleration section;

   acquiring a current planned final velocity $V_{re}$ after the uniformly decelerated deceleration section ends; and

   planning a duration of a uniform deceleration section of the deceleration section if the current planned final velocity $V_{re}$ is greater than or equal to the final velocity $v_e$.

8. The method according to claim 7, further comprising:

   replanning the durations of the uniformly accelerated deceleration section and the uniformly decelerated deceleration section if the current planned final velocity $V_{re}$ is less than the final velocity $v_e$.

9. The method according to claim 5 or 6, further comprising:

   planning a duration of a uniform velocity section of the motion trajectory, the uniform velocity section being a part of the motion trajectory except the first motion trajectory and the second motion trajectory, if a sum of a first total travel distance $S_1$ from the initial velocity $v_s$ to the current maximum preset velocity $V_{sm}$ and a second total travel distance $S_2$ from the current maximum preset velocity $V_{sm}$ to the final velocity $v_e$ is less than a straight line total distance P from the starting point to the end point.

10. The method according to claim 9, wherein the planning a duration of a uniform velocity section of the motion trajectory further comprises:

    determining a uniform velocity section distance from the sum of the first total travel distance $S_1$ and the second total travel distance $S_2$, and the straight line total distance P; and

    determining the duration of the uniform velocity section based on the maximum planned velocity and the uniform velocity section distance.

11. The method according to claim 9, further comprising:

    replanning a duration of the first motion trajectory and a duration of the second motion trajectory of the motion trajectory if the sum of the first total travel distance $S_1$ from the initial velocity $v_s$ to the current maximum preset velocity $V_{sm}$ and the second total travel distance $S_2$ from the current maximum preset velocity $V_{sm}$ to the final velocity $v_e$ is greater than the straight line total distance P from the starting point to the end point.

12. The method according to claim 11, further comprising:

    determining a planned total duration from the duration of the first motion trajectory, the duration of the second motion trajectory, and the duration of the uniform velocity section of the motion trajectory; and

    ending planning if the planned total duration is equal to a user preset time.

13. The method according to claim 1, wherein

    the current maximum preset velocity $V_{sm}$ is a velocity value which is a smaller velocity value between a system maximum velocity of the robot and a user set maximum travel velocity.

14. A method for planning a motion trajectory based on an S-curve velocity profile, comprising:

    determining a motion path of a robot from a starting point to an end point;

    if the motion path is not a straight line path from the starting point to the end point and there is any target point which is a point outside a straight line between the starting point and the end point, determining coordinates of a first intermediate point and a second intermediate point which are sequentially passed by based on a starting point location coordinate, a target point location coordinate, an end point location coordinate and a preset turning radius;

    detecting whether an initial velocity $v_s$ of a robot at the starting point is less than a current maximum preset velocity $V_{sm}$; and

    planning a duration of an acceleration section of the motion trajectory for a straight line path from the starting point to the first intermediate point, so that a maximum planned velocity obtained after the acceleration section ends is less than or equal to the current maximum preset velocity $V_{sm}$, if the initial velocity $v_s$ is less than the current maximum preset velocity $V_{sm}$.

**15.** The method according to claim 14, further comprising:
planning a duration of a deceleration section of the motion trajectory for the straight line path from the starting point to the first intermediate point, so that a maximum planned velocity obtained after the deceleration section ends is less than or equal to the current maximum preset velocity $V_{sm}$, if the initial velocity $v_s$ is greater than the current maximum preset velocity $V_{sm}$.

**16.** The method according to claim 14 or 15, further comprising:
after the planning the trajectory of the straight line path from the starting point to the first intermediate point is completed, planning a duration of a uniform velocity section of the motion trajectory for an arc path formed by the first intermediate point and the second intermediate point, the velocity of the uniform velocity section being a maximum planned velocity obtained after the planning the trajectory of the straight line path from the starting point to the first intermediate point ends, and a radius of the arc path being the preset turning radius.

**17.** The method according to claim 16, further comprising:

after the planning the trajectory of the arc path formed by the first intermediate point and the second intermediate point is completed, detecting whether the current maximum preset velocity $V_{sm}$ is greater than a final velocity $v_e$ of the robot at the end point; and
planning a duration of a deceleration section of the motion trajectory for the straight line path from the second intermediate point to the end point, so that a planned final velocity obtained after the deceleration section ends is equal to the final velocity $v_e$ of the robot at the end point, if the current maximum preset velocity $V_{sm}$ is greater than the final velocity $v_e$.

**18.** The method according to claim 17, further comprising:
planning a duration of an acceleration section of the motion trajectory for the straight line path from the second intermediate point to the end point, so that a planned final velocity obtained after the acceleration section ends is equal to the final velocity $v_e$ of the robot at the end point, if the current maximum preset velocity $V_{sm}$ is less than the final velocity $v_e$.

**19.** The method according to claim 14, wherein before the determining coordinates of a first intermediate point and a second intermediate point which are sequentially passed by based on a starting point location coordinate, a target point location coordinate, an end point location coordinate and a preset turning radius, the method further comprises:
detecting whether the target point is a waypoint of the robot.

**20.** An apparatus for planning a motion trajectory based on an S-curve velocity profile, comprising:

a motion path detection module configured to determine a motion path of the robot from a starting point to an end point;
an initial velocity detection module configured to, if the motion path is a straight line path from the starting point to the end point, detect whether an initial velocity $v_s$ of a robot at the starting point is less than a current maximum preset velocity $V_{sm}$; and
a motion trajectory planning module configured to, if the initial velocity $v_s$ is less than the current maximum preset velocity $V_{sm}$, plan a duration of an acceleration section for a first motion trajectory from the initial velocity $v_s$ to the current maximum preset velocity $V_{sm}$, so that a maximum planned velocity obtained after the acceleration section ends is less than or equal to the current maximum preset velocity $V_{sm}$.

**21.** The apparatus according to claim 20, further comprising:

a final velocity detection module configured to, after planning of the first motion trajectory from the initial velocity $v_s$ to the current maximum preset velocity $V_{sm}$ is completed, detect whether the current maximum preset velocity $V_{sm}$ is less than a final velocity $v_e$ of the robot at the end point, and
wherein the motion trajectory planning module is further configured to, if the current maximum preset velocity $V_{sm}$ is less than the final velocity $v_e$, plan a duration of an acceleration section for a second motion trajectory from the current maximum preset velocity $V_{sm}$ to the final velocity $v_e$, so that a planned final velocity obtained after the acceleration section ends is equal to the final velocity $v_e$ of the robot at the end point.

**22.** An apparatus for planning a motion trajectory based on an S-curve velocity profile, comprising:

a motion path detection module configured to determine a motion path of a robot from a starting point to an end point;

an intermediate point coordinate determination module configured to, if the motion path is not a straight line path from the starting point to the end point and there is any target point which is a point outside a straight line between the starting point and the end point, determine coordinates of a first intermediate point and a second intermediate point which are sequentially passed by based on a starting point location coordinate, a target point location coordinate, an end point location coordinate and a preset turning radius;

an initial velocity detection module configured to detect whether an initial velocity $v_s$ of a robot at the starting point is less than a current maximum preset velocity $V_{sm}$; and

a first straight line path planning module configured to, if the initial velocity $v_s$ is less than the current maximum preset velocity $V_{sm}$, plan a duration of an acceleration section of the motion trajectory for a straight line path from the starting point to the first intermediate point, so that a maximum planned velocity obtained after the acceleration section ends is less than or equal to the current maximum preset velocity $V_{sm}$.

23. The apparatus according to claim 22, further comprising:

an arc path planning module configured to, after planning the trajectory of the straight line path from the starting point to the first intermediate point is completed, plan a duration of a uniform velocity section of the motion trajectory for an arc path formed by the first intermediate point and the second intermediate point, the velocity of the uniform velocity section being a maximum planned velocity obtained after planning the trajectory of the straight line path from the starting point to the first intermediate point ends, and a radius of the arc path being the preset turning radius.

24. The apparatus according to claim 23, further comprising:

a final velocity detection module configured to, after planning the trajectory of the arc path formed by the first intermediate point and the second intermediate point is completed, detect whether the current maximum preset velocity $V_{sm}$ is greater than a final velocity $v_e$ of the robot at the end point; and

a second straight line path planning module configured to, if the current maximum preset velocity $V_{sm}$ is greater than the final velocity $v_e$, plan a duration of a deceleration section of the motion trajectory for the straight line path from the second intermediate point to the end point, so that a planned final velocity obtained after the deceleration section ends is equal to the final velocity $v_e$ of the robot at the end point.

FIG. 1

FIG. 2

FIG. 3

determining a planned total duration from a duration of the first motion trajectory, a duration of the second motion trajectory, and a duration of the uniform velocity section of the motion trajectory ∼ 401

detecting whether the planned total duration is greater than the user preset time ∼ 402

No

Yes ∼ 403

using an adaptive algorithm to reduce the planning time until the planned total duration is equal to the user preset time

detecting whether the planned total duration is less than the user preset time ∼ 404

No

Yes ∼ 405

using an adaptive algorithm to increase the planning duration until the planned total duration equals to the user preset time

Ending planning ∼ 406

FIG. 4

FIG. 5

determining coordinates of a first intermediate point and a second intermediate point which are sequentially passed by based on a starting point location coordinate, a target point location coordinate, an end point location coordinate and a preset turning radius

601

detecting whether an initial velocity $v_s$ of a robot at a starting point is less than a current maximum preset velocity $V_{sm}$

602

Less than

equal to

Greater than

planning a duration of an acceleration section of a motion trajectory for the straight line path from the starting point to the first intermediate point, so that a maximum planned velocity obtained after the acceleration section ends is less than or equal to the current maximum preset velocity $V_{sm}$

603

planning the duration of a deceleration section of the motion trajectory for the straight line path from the starting point to the first intermediate point, so that a maximum planned velocity obtained after the deceleration section ends is less than or equal to the current maximum preset velocity $V_{sm}$

604

performing a uniform velocity section planning according to the current maximum preset velocity $V_{sm}$ for the straight line path from the starting point to the first intermediate point

605

after planning of the trajectory of the straight line path from the starting point to the first intermediate point is completed, planning a duration of a uniform velocity section of the motion trajectory for an arc path formed by the first intermediate point and the second intermediate point

606

after planning of the trajectory of the arc path formed by the first intermediate point and the second intermediate point is completed, detecting whether the current maximum preset velocity $V_{sm}$ is greater than a final velocity $v_e$ of the robot at the end point

607

Greater than

equal to

Less than

planning the duration of the deceleration section of the motion trajectory for the straight line path from the second intermediate point to the end point, so that the planned final velocity obtained after the decelerated acceleration section ends is equal to the final velocity $v_e$ of the robot at the end point

608

planning a duration of an acceleration section of a motion trajectory for the straight line path from the second intermediate point to the end point, so that a planned final velocity obtained after the acceleration section ends is equal to the final velocity $v_e$ of the robot at the end point

609

planning a duration of a uniform velocity section for the straight line path from the second intermediate point to the end point according to the current maximum preset velocity $V_{sm}$

610

FIG. 6

FIG. 7a

FIG. 7b

FIG. 8

## INTERNATIONAL SEARCH REPORT

International application No.

**PCT/CN2022/128611**

| A. | CLASSIFICATION OF SUBJECT MATTER |
|---|---|

B25J 9/16(2006.01)i

According to International Patent Classification (IPC) or to both national classification and IPC

| B. | FIELDS SEARCHED |
|---|---|

Minimum documentation searched (classification system followed by classification symbols)

B25J

Documentation searched other than minimum documentation to the extent that such documents are included in the fields searched

Electronic data base consulted during the international search (name of data base and, where practicable, search terms used)

CNTXT, DWPI, SIPOABS, ENTXT: 机器人, 机械手, 机械臂, 轨迹, 路线, 曲线, 路径, 规划, 速度, 加速度, robot, manipulator, arm, path?, trajectory, curv+, 'S', speed?, acceleration

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | CN 105922265 A (GUANGZHOU CVTE ELECTRONIC TECHNOLOGY CO., LTD.) 07 September 2016 (2016-09-07) description, paragraphs 50-156, and figures 1-12 | 1-24 |
| A | CN 112518744 A (WUYI UNIVERSITY) 19 March 2021 (2021-03-19) entire document | 1-24 |
| A | CN 110900597 A (SHANGHAI TRIOWIN INTELLIGENT EQUIPMENT CO., LTD.) 24 March 2020 (2020-03-24) entire document | 1-24 |
| A | CN 111897216 A (HUAZHONG UNIVERSITY OF SCIENCE AND TECHNOLOGY) 06 November 2020 (2020-11-06) entire document | 1-24 |
| A | WO 2018131778 A1 (HANWHA TECHWIN CO., LTD.) 19 July 2018 (2018-07-19) entire document | 1-24 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 December 2022** | **19 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/128611**

| Patent document cited in search report | | | Publication date (day/month/year) | Patent family member(s) | | | Publication date (day/month/year) |
|---|---|---|---|---|---|---|---|
| CN | 105922265 | A | 07 September 2016 | WO | 2017219639 | A1 | 28 December 2017 |
| CN | 112518744 | A | 19 March 2021 | None | | | |
| CN | 110900597 | A | 24 March 2020 | None | | | |
| CN | 111897216 | A | 06 November 2020 | None | | | |
| WO | 2018131778 | A1 | 19 July 2018 | CN | 110023856 | A | 16 July 2019 |
|  |  |  |  | KR | 20180082115 | A | 18 July 2018 |

Form PCT/ISA/210 (patent family annex) (January 2015)